# EUROPEAN PATENT APPLICATION

(11) **EP 4 844 727 A1**
(43) Date of publication of application: **25.11.2026**
(21) Application number: 24927331.9
(22) Date of filing: 27.02.2024
(51) Int. Cl.: G08G 1/09, G06F 16/90, G08G 1/123

(54) **INFORMATION PROCESSING DEVICE, INFORMATION PROCESSING METHOD, AND OPERATION MANAGEMENT SYSTEM**

(71) Applicant: Mitsubishi Electric Corporation, Tokyo 100-8310 (JP)
(72) Inventor: WATANABE, Misato, Tokyo 100-8310 (JP); KURIYAMA, Taiki, Tokyo 100-8310 (JP); KUBOTA, Yuri, Tokyo 100-8310 (JP); KATAOKA, Tatsunari, Tokyo 100-8310 (JP); FUKAGAWA, Hirofumi, Tokyo 100-8310 (JP)
(74) Representative: Pfenning, Meinig & Partner mbB
(86) International application number: PCT/JP2024/006899
(87) International publication number: WO 2025/181877

(57) **Abstract**

An information processing device including: a current information acquiring unit that acquires current information that is information received at the current time; a conversational information controlling unit that outputs a conversation screen including a conversational sentence and an operation region related to an action task by a virtual responder generated on the basis of the current information and know-how information about each past responder related to an operation of a moving object; and an action operating signal outputting unit that receives an operation on the operation region, and outputs a control signal for issuing a command to perform an operation related to the action task.

## Description

### TECHNICAL FIELD

The technology according to the present disclosure relates to an information processing technology for processing information for assisting management of operations of moving objects.

### BACKGROUND ART

There is a conventional technique for assisting management of operations of moving objects.

Patent Literature 1 discloses that the priority levels of vehicles being monitored by a manager are presented to the manager, with risks (a running risk and a route risk) being comprehensively taken into consideration on the basis of vehicle information and operation information transmitted from a plurality of vehicles. As a result, the burden of monitoring on the manager is reduced so that the manager is assisted to be able to appropriately select the vehicles to be monitored.

### CITATION LIST

### PATENT LITERATURE

Patent Literature 1: JP 2020-61121 A

### SUMMARY OF INVENTION

### TECHNICAL PROBLEM

However, in the conventional technique, a manager is responsible for taking action for an event that occurs during monitoring. Therefore, there is a problem in that the manager may not always be able to take an appropriate action for an event to be handled, depending on the manager's level of experience.

The present disclosure has been made to solve the above problem, and aims to be capable of assisting actions so that a manager can take an appropriate action for an event for which an action should be taken.

### SOLUTION TO PROBLEM

An information processing device according to the present disclosure includes:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task, after receiving an operation on the at least one operation region.

### ADVANTAGEOUS EFFECTS OF INVENTION

According to the present disclosure, it is possible to assist actions so that a manager can take an appropriate action for an event for which an action should be taken.

### BRIEF DESCRIPTION OF DRAWINGS

FIG. 1 is a diagram illustrating an example configuration of an operation management system including an information processing device according to a first embodiment of the present disclosure.
FIG. 2 is a diagram illustrating an example of a fundamental configuration of an information processing device according to the first embodiment of the present disclosure.
FIG. 3 is a flowchart illustrating an example of processing to be performed by an information processing device according to the first embodiment of the present disclosure.
FIG. 4 is a diagram illustrating an example configuration of an information processing device according to a second embodiment of the present disclosure.
FIG. 5 is a diagram illustrating a specific example configuration of an assisting information generating unit in the information processing device according to the second embodiment of the present disclosure.
FIG. 6 is a flowchart illustrating an example of first processing in the information processing device according to the second embodiment of the present disclosure.
FIG. 7 is a diagram for explaining the functions by the first processing in the information processing device according to the second embodiment of the present disclosure.
FIG. 8 is a flowchart illustrating an example of second processing in the information processing device according to the second embodiment of the present disclosure.
FIG. 9 is a diagram for explaining the functions by the second processing in the information processing device according to the second embodiment of the present disclosure.
FIG. 10 is a flowchart illustrating an example of third processing in the information processing device according to the second embodiment of the present disclosure.
FIG. 11 is a diagram for explaining the functions by the third processing in the information processing device according to the second embodiment of the present disclosure.
FIG. 12 is a flowchart illustrating an example of fourth processing in the information processing device according to the second embodiment of the present disclosure.
FIG. 13 is a diagram for explaining the functions by the fourth processing in the information processing device according to the second embodiment of the present disclosure.
FIG. 14 is a flowchart illustrating an example of fifth processing in the information processing device according to the second embodiment of the present disclosure.
FIG. 15 is a diagram for explaining the functions by the fifth processing in the information processing device according to the second embodiment of the present disclosure.
FIG. 16 is a flowchart illustrating an example of sixth processing in the information processing device according to the second embodiment of the present disclosure.
FIG. 17 is a diagram for explaining the functions by the sixth processing in the information processing device according to the second embodiment of the present disclosure.
FIG. 18 is a flowchart illustrating an example of seventh processing in the information processing device according to the second embodiment of the present disclosure.
FIG. 19 is a diagram for explaining the functions by the seventh processing in the information processing device according to the second embodiment of the present disclosure.
FIG. 20 is a diagram illustrating an example configuration of an information processing device according to a third embodiment of the present disclosure.
FIG. 21 is a flowchart illustrating an example of processing to be performed by a conversational information controlling unit in the information processing device according to the third embodiment of the present disclosure.
FIG. 22 is a flowchart illustrating an example of processing to be performed by a detailed information controlling unit in the information processing device according to the third embodiment of the present disclosure.
FIG. 23 is a diagram illustrating an overview of functions in the information processing device according to the third embodiment of the present disclosure.
FIG. 24 is a flowchart illustrating an example of first processing in the information processing device according to the third embodiment of the present disclosure.
FIG. 25 is a first diagram for explaining the functions by the first processing in the information processing device according to the third embodiment of the present disclosure.
FIG. 26 is a second diagram for explaining the functions by the first processing in the information processing device according to the third embodiment of the present disclosure.
FIG. 27 is a third diagram for explaining the functions by the first processing in the information processing device according to the third embodiment of the present disclosure.
FIG. 28 is a flowchart illustrating an example of second processing in the information processing device according to the third embodiment of the present disclosure.
FIG. 29 is a first diagram for explaining the functions by the second processing in the information processing device according to the third embodiment of the present disclosure.
FIG. 30 is a second diagram for explaining the functions by the second processing in the information processing device according to the third embodiment of the present disclosure.
FIG. 31 is a flowchart illustrating an example of third processing in the information processing device according to the third embodiment of the present disclosure.
FIG. 32 is a first diagram for explaining the functions by the third processing in the information processing device according to the third embodiment of the present disclosure.
FIG. 33 is a second diagram for explaining the functions by the third processing in the information processing device according to the third embodiment of the present disclosure.
FIG. 34 is a diagram illustrating a first example of a hardware configuration for implementing functions achieved by a configuration according to the present disclosure.
FIG. 35 is a diagram illustrating a second example of a hardware configuration for implementing functions achieved by a configuration according to the present disclosure.

### DESCRIPTION OF EMBODIMENTS

To explain the present disclosure in greater detail, embodiments of the disclosure are described below with reference to the accompanying drawings.

### First Embodiment.

In a first embodiment, a basic mode of the present disclosure is described.

It is a diagram illustrating an example configuration of an operation management system including an information processing device of the present disclosure.

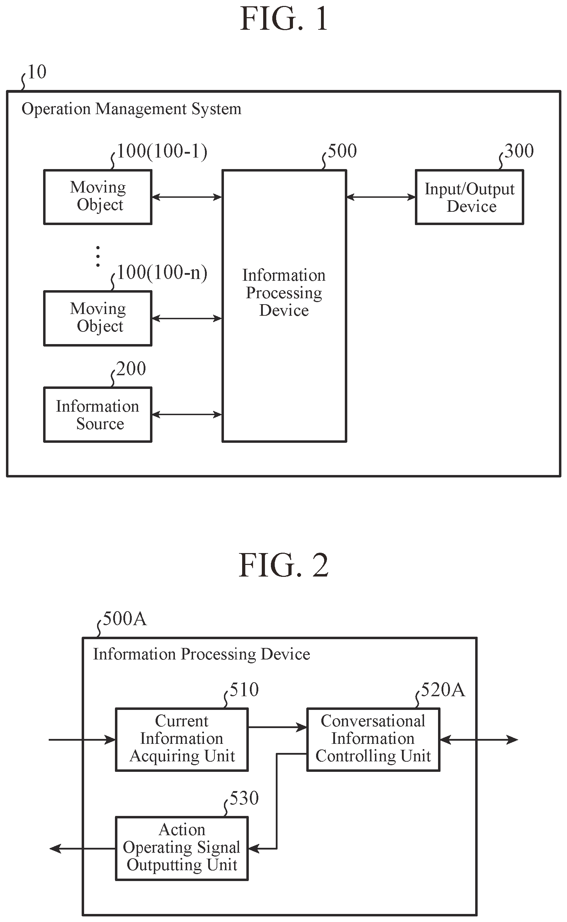

FIG. 1 is a diagram illustrating an example configuration of an operation management system 10 including an information processing device 500 according to the first embodiment of the present disclosure.

The operation management system 10 is described below on the assumption that there are a plurality of operation managers using the same system, and a plurality of operation areas to be used by moving objects.

Each operation manager can use the system by logging in to the system with his/her user ID.

The operation managers will be hereinafter also referred to as "users".

The operation management system 10 illustrated in FIG. 1 is a system for performing operation management on moving objects 100 (100-1,..., 100-n (n ≥ 1)).

The operation management system 10 includes the information processing device 500 that communicates with moving on-board devices mounted on the respective moving objects.

The operation management system 10 illustrated in FIG. 1 includes the moving objects 100 (100-1,..., 100-n (n ≥ 1)), an information source 200, an input/output device 300, and the information processing device 500.

The moving objects 100 (100-1,..., 100-n (n ≥ 1)) are business vehicles, for example. Alternatively, the moving objects 100 (100-1,..., 100-n (n ≥ 1)) may be general private vehicles.

In a case where the moving objects are business vehicles, the moving objects are buses, carts, taxis, personal mobility vehicles, trucks, or the like. In the present disclosure, the moving objects 100 (100-1,..., 100-n (n ≥ 1)) may be of one of the types including bus, cart, taxi, personal mobility vehicle, truck, and the like, or may be a combination of two or more thereof.

In a case where the moving objects 100 (100-1,..., 100-n (n ≥ 1)) are moving objects as public transportation, operations of the moving objects 100 (100-1,..., 100-n (n ≥ 1)) are managed on the basis of an operation schedule such as an operation timetable.

The moving objects 100 (100-1,..., 100-n (n ≥ 1)) include moving on-board devices (not shown).

In the present disclosure, the moving on-board devices may be one type of device or a plurality of types of devices for each one moving object.

The information source 200 outputs current information to be used in the information processing device 500.

The current information is information at the current time.

The current information that is output by the information source 200 is information such as sensor information obtained by a plurality of sensors including sensors mounted on the moving object, road traffic information, and operation information. Specifically, the current information includes information regarding failures, traffic jams, delays, and communication failures, for example. The current information is assumed to be information related to troubles in the moving objects, but is not limited to the above example. In the present disclosure, know-how information in the information processing device 500 to be described later is only required to indicate the correspondence to some of the current information related to operations of the moving objects.

The input/output device 300 is designed to be capable of receiving information from the information processing device 500, and presenting the received information to the users through an image and voice.

Also, the input/output device 300 is designed so that the users can perform operations, make requests, and input information in response to each piece of information presented by the information processing device 500.

The input/output device 300 is a display device equipped with a touch-panel function, for example.

On the basis of the current information and the know-how information about each past responder, the information processing device 500 outputs a conversation screen including a conversational sentence and an operation region related to the task (action task) to be handled by a user.

The know-how information indicates the actions for the past tasks.

The know-how information includes information such as "date and time", metadata for each responder ("attribute information" about the responder and "identification information" about the responder), "task", and "action".

The "date and time" indicates the dates and times related to the past actions.

The "attribute information" indicates the attributes of the responders. The attribute of a responder includes information such as affiliation, position, years of experience, and age. The attribute of a responder may also include gender, personality, and the like.

The "identification information" indicates information for identifying the responders. The identification information includes names, identification numbers, and the like.

The "task" is assumed for any trouble related to the moving objects. The tasks include troubles related to living bodies, such as a physical condition and stress on an occupant in a moving object.

The "action" is assumed to be "function", "instruction", "scene", "action result", and the like.

The "function" indicates which screen function was used for the task. The screen functions are a map, a camera image, a reservation list, route creation, an operation schedule, and the like.

The "instruction" is contents indicating what kind of control instruction has been given to the moving object or the operation system with respect to the task. The control instruction is a route change, a vehicle stop, a road closure setting, a substitute vehicle setting, an increase/decrease service, or the like.

The "scene" indicates what kind of action has been taken under what kind of situation. For example, the contents are ○○ when the number of people in the vehicle is large, and are ○○ when the number of people is small.

The "action result" indicates which action was taken to quickly solve the trouble, and whether the subsequent operations were smooth.

That is, on the basis of the above know-how information, the information processing device 500 can output a conversation screen by taking into consideration the actions and the action candidates for cases similar to the past errors and trouble events on the basis of the current information, with the past responders added thereto.

The conversation screen is assumed to be in the form of a chat. Accordingly, the conversation screen can also be expressed as a chat image.

The conversation screen includes a "conversational sentence" and an "operation region".

The "conversational sentence" indicates an utterance sentence of a virtual responder, for example. The "conversational sentence" of the virtual responder is a sentence expressing the contents related to the task (action task) corresponding to the current information in a conversational form (colloquial form).

In the operation management system as an information processing system including the information processing device 500 of the present disclosure, the virtual responder is assumed to be a chatbot-like concierge in the system, a responder simulating another operation manager who has used the same operation management system, or a responder simulating an operation manager of each attribute of the present responder.

Meanwhile, the "conversational sentence" indicates an uttered sentence of a user, for example. The "conversational sentence" of a user is based on a text sentence that has been input to the information processing device 500 by the user.

The "conversational sentence" is used to display the uttered sentence of the virtual responder and the uttered sentence of the user in time series.

The "operation region" is an image for receiving the action operation related to the task (action task) corresponding to the current information, in association with the "conversational sentence" of the virtual responder.

The "operation region" is an image displayed in association with the "conversational sentence", and is displayed adjacent to the "conversational sentence" image.

The "operation region" includes text indicating the operation contents. The operation contents include the execution button for the operation contents related to the corresponding operation indicated in the "conversational sentence" to the virtual responder, and a cancel button for canceling the corresponding operation being currently executed, for example.

Also, the conversation screen may include an icon image for each virtual responder. By this means, conversation screens can be output, distinguishing a chatbot-like concierge in the system, a responder simulating another operation manager who has used the same operation management system, and a responder simulating an operation manager of each attribute of the subject responder, from one another.

Further, the conversation screen may include an image to be described in each embodiment. For example, the conversation screen may include a "status flag" indicating the state of the action for the task. The "status flag" indicates "unsolved" or "solved" for the task, for example.

An example configuration of the information processing device according to the first embodiment of the present disclosure is now described.

FIG. 2 is a diagram illustrating an example of the fundamental configuration of the information processing device according to the first embodiment of the present disclosure.

An information processing device 500A illustrated in FIG. 2 includes a current information acquiring unit 510, a conversational information controlling unit 520, and an action operating signal outputting unit 530.

The current information acquiring unit 510 acquires current information that is information received at the current time.

The current information acquiring unit 510 acquires the current information from the moving objects 100 and the information source 200.

The current information may include states inside and outside a moving object.

The conversational information controlling unit 520A outputs a conversation screen including a conversational sentence and an operation region related to the action task by a virtual responder generated on the basis of the current information and know-how information about each past responder related to operations of the moving objects 100.

The know-how information includes metadata of each past responder.

The metadata includes identification information and attribute information about each past responder.

The virtual responder is generated on the basis of the identification information or the attribute information.

The conversational information controlling unit 520A may be designed to search for the action task, using table data stored in advance and the current information.

Also, the conversational information controlling unit 520A may include AI that learns the know-how information, uses the current information as an input, and uses the action task as an output.

Also, the conversational information controlling unit 520A may include generative AI that uses the current information as an input, and outputs a conversation screen including a conversational sentence and an operation region related to the action task to be taken by a virtual responder.

Note that the functions of the AI and the generative AI may be designed to be implemented via an external server.

The action operating signal outputting unit 530 receives an operation on the operation region, and outputs a control signal for issuing a command to perform an operation related to the action task.

The action operating signal outputting unit 530 outputs the control signal for issuing a command to perform an operation related to the action task, to the moving on-board devices of the moving objects 100.

In addition to the above components, the information processing device 500A includes a control unit (not shown), a storage unit (not shown), and a communication unit (not shown).

The control unit (not shown) controls the entire information processing device 500A and each component. The control unit (not shown) activates the information processing device 500A in accordance with a command from outside, for example. Also, the control unit (not shown) controls states (operating states = states such as activated, shutdown, or sleeping) of the information processing device 500A.

The storage unit (not shown) stores each piece of the data to be used by the information processing device 500A. The storage unit (not shown) stores outputs (output data) from the respective components in the information processing device 500A, and outputs data requested for each component to the requester component, for example.

The communication unit (not shown) communicates with an external device. For example, communication is performed between the information processing device 500A and a peripheral device (such as a moving on-board device). In a case where the information processing device 500A and the moving on-board device are not connected by a cable, for example, the communication unit (not shown) has a function of performing communication between the information processing device 500A and the moving on-board device. Further, the communication unit (not shown) has a function of performing communication with a server device that is an external device.

The control unit (not shown), the storage unit (not shown), and the communication unit (not shown) are the same in information processing devices 500B and 500C according to embodiments to be described later.

An example of processing to be performed by the information processing device 500A is now described.

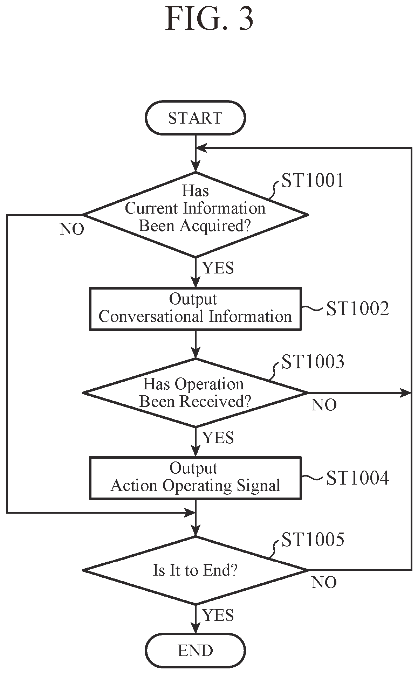

FIG. 3 is a flowchart illustrating an example of processing to be performed by the information processing device according to the first embodiment of the present disclosure.

The processing illustrated in FIG. 3 is an information processing method implemented by the information processing device 500A.

For example, the information processing device 500A illustrated in FIG. 2 starts the processing illustrated in FIG. 3 when in a normal monitoring state, for example. The normal monitoring state is a state in which the information processing device 500A has not acquired the current information for which an action is to be taken.

The information processing device 500A then performs a current information acquisition determining process (step ST1001).

In the current information acquisition process, the current information acquiring unit 510 of the information processing device 500A determines whether the current information for which an action is to be taken has been received at the current time. If it is determined that the current information for which an action is to be taken has not been received (step ST1001 "NO"), the current information acquiring unit 510 proceeds to the processing in step ST1005. If it is determined that the current information for which an action is to be taken has been received (step ST1001 "YES"), the current information acquiring unit 510 acquires the current information, which is the information received at the current time, from the information source 200.

The information processing device 500A then performs a conversational information outputting process (step ST1002).

In the conversational information outputting process, the conversational information controlling unit 520 of the information processing device 500A outputs a conversation screen including a conversational sentence and an operation region related to the action task by a virtual responder generated on the basis of the current information and know-how information about each past responder related to operations of the moving objects.

The information processing device 500A then performs an operation reception determining process (step ST1003).

In the operation reception determining process, the action operating signal outputting unit 530 of the information processing device 500A determines whether an operation on the operation region has been received.

If it is determined that the action operating signal outputting unit 530 has not received any operation on the operation region for a certain period of time (step ST1003 "NO"), the information processing device 500B proceeds to the processing in step ST1001.

If it is determined that the action operating signal outputting unit 530 has received an operation on the operation region (step ST1003 "YES"), the information processing device 500B proceeds to the processing in step ST1004.

The information processing device 500A then performs an action operating signal outputting process (step ST1004).

In the action operating signal outputting process, the action operating signal outputting unit 530 of the information processing device 500A outputs an action operating signal related to the operation region for which the operation has been received, to the device that is to perform the action operation.

The information processing device 500A then proceeds to an end determining process (step ST1005).

In the end determining process, the control unit (not shown) of the information processing device 500A determines whether to end the processing being performed by the information processing device 500A. The control unit (not shown) determines whether to end the processing being performed by the information processing device 500A, in accordance with an end command from outside or an execution program. At this point of time, the conversational information controlling unit 520 of the information processing device 500A checks whether the action task has been solved by the output of the action operating signal from the action operating signal outputting unit 530.

If the control unit (not shown) determines not to end the processing being performed by the information processing device 500A (step ST1005 "NO"), the process proceeds to the processing in step ST1001, and the repetitive processing is performed starting from the processing in step ST1001.

If the control unit (not shown) determines to end the processing being performed by the information processing device 500A (step ST1005 "YES"), the information processing device 500A ends the processing.

At this point of time, the conversational information controlling unit 520 of the information processing device 500A changes the status flag in the conversation screen from "unsolved" to "solved".

Through the above disclosure, the present disclosure can assist an action so that a manager can take an appropriate action for an event for which an action should be taken.

The present embodiment discloses the following configuration.

An information processing device including:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task, after receiving an operation on the at least one operation region.

With this configuration, an effect can be achieved that it is possible to provide an information processing device that can assist an action so that a manager can take an appropriate action for an event for which an action should be taken.

The present embodiment discloses the following configuration.

An information processing method implemented by an information processing device, the information processing method including,
by a current information acquiring unit of the information processing device, acquiring current information that is information received at a current time,
by a conversational information controlling unit of the information processing device, outputting a conversation screen including a conversational sentence and at least one operation region related to an action task by a virtual responder generated on a basis of the current information and know-how information about each past responder related to an operation of a moving object, and
by an action operating signal outputting unit of the information processing device, outputting a control signal for issuing a command to perform an operation related to the action task, after receiving an operation on the at least one operation region.

With this configuration, it is possible to provide an information processing method that can assist an action so that a manager can take an appropriate action for an event for which an action should be taken.

The present embodiment discloses the following configuration.

An information processing program for causing a computer to operate as an information processing device including:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task, after receiving an operation on the at least one operation region.

With this configuration, it is possible to provide an information processing program that can assist an action so that a manager can take an appropriate action for an event for which an action should be taken.

The present embodiment discloses the following configuration.

An operation management system including an information processing device to perform communication with a moving on-board device mounted on each moving object,
the information processing device including:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task to the moving on-board device, after receiving an operation on the operation region.

With this configuration, it is possible to provide an operation management system that can assist an action so that a manager can take an appropriate action for an event for which an action should be taken.

### Second Embodiment.

A second embodiment concerns an embodiment of a configuration for achieving more specific functions, in addition to the functions of the configuration according to the first embodiment.

In the second embodiment, explanation of the same components as the already-described components according to the first embodiment among the components according to the second embodiment is omitted as appropriate.

An example configuration of an information processing device according to the second embodiment of the present disclosure is now described.

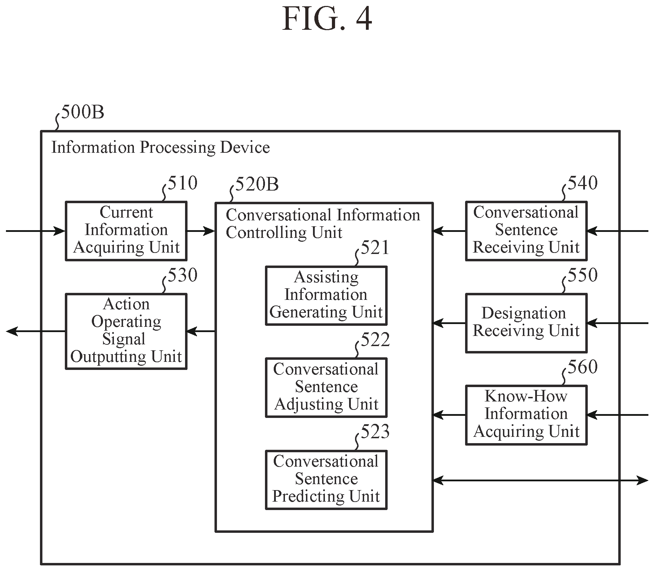

FIG. 4 is a diagram illustrating an example configuration of the information processing device according to the second embodiment of the present disclosure.

An information processing device 500B illustrated in FIG. 4 includes a current information acquiring unit 510, a conversational information controlling unit 520, a determination-assisting information generating unit 521, a conversational sentence adjusting unit 522, a conversational sentence predicting unit 523, an action operating signal outputting unit 530, a conversational sentence receiving unit 540, a designation receiving unit 550, and a know-how information acquiring unit 560.

Like the already-described current information acquiring unit 510, the current information acquiring unit 510 acquires current information that is information received at the current time.

Like the already-described conversational information controlling unit 520A, the conversational information controlling unit 520B outputs a conversation screen including a conversational sentence and an operation region related to the action task by a virtual responder generated on the basis of the current information and know-how information about each past responder related to operations of moving objects 100.

Further, the conversation screen including the conversational sentence by the virtual responder output by the conversational information controlling unit 520B also includes a plurality of the operation regions.

Furthermore, the conversational information controlling unit 520B newly outputs a task selecting image for each action task when a plurality of action tasks to be handled is present at the same time, and outputs the conversation screen related to the selected action task when the action task is selected via the task selecting image.

The conversational information controlling unit 520B illustrated in FIG. 4 includes the determination-assisting information generating unit 521, the conversational sentence predicting unit 523, and the conversational sentence adjusting unit 522.

The determination-assisting information generating unit 521 generates determination-assisting information on the basis of the action task for each operation region and an operation history related to the action task.

In this case, the conversation screen output by the conversational information controlling unit 520B includes the determination-assisting information for each of the operation regions.

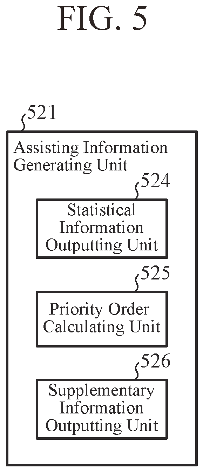

FIG. 5 is a diagram illustrating a specific example configuration of the determination-assisting information generating unit 521 in the information processing device 500 according to the second embodiment of the present disclosure.

The determination-assisting information generating unit 521 illustrated in FIG. 5 receives and presets an operation of selecting a type of determination assist, and outputs the determination-assisting information of the selected type.

The determination-assisting information generating unit 521 includes a statistical information outputting unit 524, a priority level calculating unit 525, and a supplementary information outputting unit 526.

The statistical information outputting unit 524 outputs statistical information about operation candidates related to the operation regions.

The statistical information outputting unit 524 calculates statistical information based on know-how information including metadata of each of the responders. The statistical information outputting unit 524 outputs the statistical information as the determination-assisting information.

In this case, the determination-assisting information is the statistical information based on the know-how information including the metadata of each of the responders.

The priority level calculating unit 525 calculates the priority levels of the operation candidates related to the action tasks.

The priority level calculating unit 525 outputs the priority level of each of the operation candidates related to the operation regions as the determination-assisting information.

In this case, the determination-assisting information is the priority levels of operations related to the operation regions.

The supplementary information outputting unit 526 outputs supplementary information related to the action tasks.

The supplementary information related to the action tasks is determination-assisting information that is information for determining action operations related to the action tasks, for example.

The supplementary information outputting unit 526 outputs selection reason information including the reason for selecting an operation region as the determination-assisting information for each operation related to the operation region.

In this case, the determination-assisting information is selection reason information including the reason for selecting the operation region.

The description now returns to the example configuration illustrated in FIG. 4.

The conversational sentence predicting unit 523 predicts a candidate for a conversational sentence of a user, on the basis of feature information indicating the features of the action by the user as pre-stored, the current information, and the know-how information.

The conversational sentence adjusting unit 522 adjusts the conversational sentence of the user, on the basis of an operation by the user. Specifically, when the conversational sentence predicting unit 523 predicts a conversational sentence of a user, the conversational sentence adjusting unit 522 receives an operation by the user, and adjusts the conversational sentence predicted by the conversational sentence predicting unit 523 on the basis of the operation by the user.

Like the already-described action operating signal outputting unit 530, the action operating signal outputting unit 530 receives an operation on the operation region, and outputs a control signal for issuing a command to perform an operation related to the action task.

The conversational sentence receiving unit 540 receives a conversational sentence of a user.

The conversational sentence receiving unit 540 receives the conversational sentence from the user via an input/output device 300.

In this case, the conversational information controlling unit 520B outputs a conversation screen, further using the conversational sentence received by the conversational sentence receiving unit 540.

The designation receiving unit 550 receives designation information for designating the virtual responder via the conversational sentence receiving unit 540.

In this case, the conversational information controlling unit 520B outputs a conversation screen including a conversational sentence by the virtual responder, further on the basis of the designation information.

When a command to perform an operation related to the action task is issued, the conversational information controlling unit 520B outputs a conversation screen including a know-how inputting region for receiving an input of the know-how information related to the responder.

The know-how information acquiring unit 560 stores the know-how information acquired via the know-how inputting region, with the metadata of each of the responders attached thereto.

The know-how information includes the metadata of each of the past responders.

The metadata includes identification information and attribute information about each of the past responders.

### [First Function in Second Embodiment]

An example of processing and an example of an operation image according to a first function of the information processing device 500B are now described.

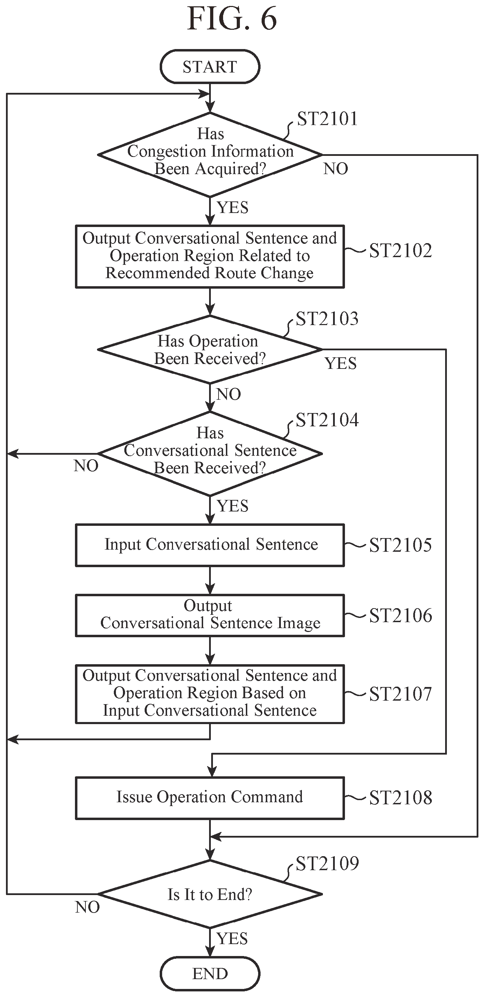

FIG. 6 is a flowchart illustrating an example of first processing in an information processing device according to the second embodiment of the present disclosure.

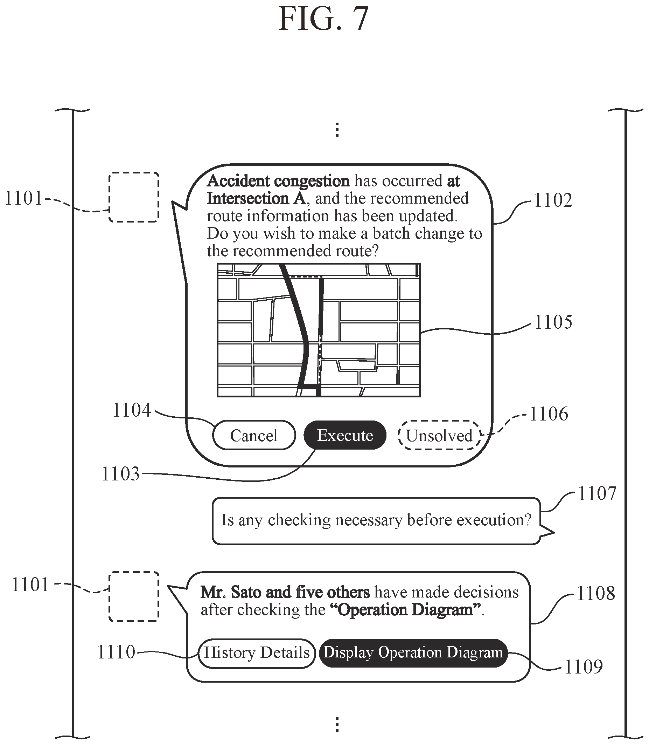

FIG. 7 is a diagram for explaining the functions by the first processing in the information processing device according to the second embodiment of the present disclosure.

The processing illustrated in FIG. 6 is an information processing method implemented by the information processing device 500B.

For example, when the current information is input, the information processing device 500B illustrated in FIG. 4 starts the processing illustrated in FIG. 6. An example of processing to be performed in a case where the current information is congestion information is described herein.

The information processing device 500B then performs a congestion information acquisition determining process (step ST2101).

In the congestion information acquisition determining process, the current information acquiring unit 510 of the information processing device 500B determines whether the current information is current information for which an action is to be taken. In FIG. 6, the current information acquiring unit 510 determines whether the current information is congestion information for which an action is to be taken.

If the current information is determined not to be current information (congestion information) for which an action is to be taken (step ST2101 "NO"), the current information acquiring unit 510 proceeds to the processing in step ST2109.

If the current information is determined to be current information (congestion information) for which an action is to be taken (step ST2101 "YES"), the current information acquiring unit 510 acquires the congestion information as the current information for which an action is to be taken. The current information acquiring unit 510 outputs the congestion information to the conversational information controlling unit 520.

The information processing device 500B then performs a process of outputting a conversational sentence and an operation region related to a recommended route change (step ST2102).

In the process, after receiving the congestion information from the current information acquiring unit 510, the conversational information controlling unit 520 of the information processing device 500B outputs a conversational sentence and an operation region related to a recommended route change as illustrated in FIG. 7 when recommended routes are changed as a result of checking of the recommended route on the basis of the congestion information.

The conversation screen displaying region illustrated in FIG. 7 includes an icon 1101, a conversation screen (operation region) 1102, an execution button (operation region) 1103, a cancel button (operation region) 1104, an action task-related image (operation region) 1105, and an unsolved indication 1106.

The icon 1101 indicates the virtual responder who has issued the conversation screen (operation region) 1102. The virtual responder is a responder in a case where all the know-how information is compiled, or a responder generated from the identification information and the attribute information about the respective past responders.

The execution button (operation region) 1103 is an operation region that receives an operation of executing an action task and an action related to a conversational sentence.

The cancel button (operation region) 1104 is an operation region that receives an operation to cancel an action.

The action task-related image (operation region) 1105 illustrated in FIG. 7 is a map showing traffic congestion and a recommended route change due to traffic congestion.

The unsolved indication 1106 is an image (an example of a status flag) indicating that the action task related to the conversation screen is unsolved.

The information processing device 500B then performs an operation reception determining process (step ST2103).

In the operation reception determining process, the action operating signal outputting unit 530 of the information processing device 500B determines whether an operation on the operation region has been received.

If it is determined that the action operating signal outputting unit 530 has not received any operation on the operation region for a certain period of time (step ST2103 "NO"), the information processing device 500B proceeds to the processing in step ST2104.

If it is determined that the action operating signal outputting unit 530 has received an operation on the operation region (step ST2103 "YES"), the information processing device 500B proceeds to the processing in step ST2108.

The information processing device 500B then performs a conversational sentence reception determining process (step ST2104).

In the conversational sentence reception determining process, if it is determined that the conversational sentence receiving unit 540 of the information processing device 500B has not received any conversational sentence (step ST2104 "NO"), the information processing device 500B proceeds to the processing in step ST2101.

If it is determined that the conversational sentence receiving unit 540 has received a conversational sentence (step ST2104 "YES"), the information processing device 500B proceeds to the processing in step ST2105.

The information processing device 500B then performs a conversational sentence inputting process (step ST2105).

In the conversational sentence inputting process, the conversational sentence receiving unit 540 of the information processing device 500B inputs input conversational sentence information indicating the received input conversational sentence to the conversational information controlling unit 520B.

The information processing device 500B then performs a conversational sentence image outputting process (step ST2106).

In the conversational sentence image outputting process, the conversational information controlling unit 520B of the information processing device 500B outputs a conversational sentence image (operation region) 1107 as shown in FIG. 7, for example, on the basis of the input conversational sentence information.

The information processing device 500B then performs a process of outputting a conversational sentence based on the conversational sentence input by the user and an operation region (step ST2107).

In the process, the conversational information controlling unit 520B of the information processing device 500B outputs a conversational sentence image including a conversational sentence indicating a reply and an operation region, in response to the conversational sentence input by the user.

In FIG. 7, an operation diagram displaying button (operation region) 1109 and a history detail button (operation region) 1110 are included in a conversation screen (operation region) 1108 indicating an answer to a conversation screen 1107 indicating a question input by the user. A function of displaying the operation diagram by operating the operation diagram displaying button (operation region) 1109 can be achieved. Also, a function of displaying the details of the history by operating the history detail button (operation region) 1110 can be achieved.

The information processing device 500B then proceeds to the processing in step ST2101.

In a case where there is congestion information currently being output in the processing in steps ST2101 and ST2102, the information processing device 500B maintains the output of the conversation screen.

Further, in a case where congestion information is newly acquired in the processing in step ST2101 and step ST2102, the information processing device 500B maintains the output of the conversation screen, and outputs a new conversation screen.

If it is determined that the action operating signal outputting unit 530 has received an operation on the operation region in the processing in step ST2103 (step ST2103 "YES"), the information processing device 500B proceeds to the processing in step ST2108.

The information processing device 500B then performs an operation command issuing process (step ST2108).

In the operation command issuing process, the action operating signal outputting unit 530 of the information processing device 500B receives an operation on the operation region, and outputs a control signal for issuing a command to perform an operation related to the action task.

The information processing device 500B then proceeds to an end determining process (step ST2109).

In the end determining process, the control unit (not shown) of the information processing device 500B determines whether to end the processing being performed by the information processing device 500B. The control unit (not shown) determines whether to end the processing being performed by the information processing device 500B, in accordance with an end command from outside or an execution program.

If the control unit (not shown) determines not to end the processing being performed by the information processing device 500B (step ST2109 "NO"), the process proceeds to the processing in step ST2101, and the repetitive processing is performed starting from the processing in step ST2101.

If the control unit (not shown) determines to end the processing being performed by the information processing device 500B (step ST2109 "YES"), the information processing device 500B ends the processing.

With the first function, in a case where a large amount of similar know-how information is accumulated, it is possible to aggregate the know-how information and then perform assisting.

### [Second Function in Second Embodiment]

An example of processing and an example of an operation image according to a second function of the information processing device 500B are now described.

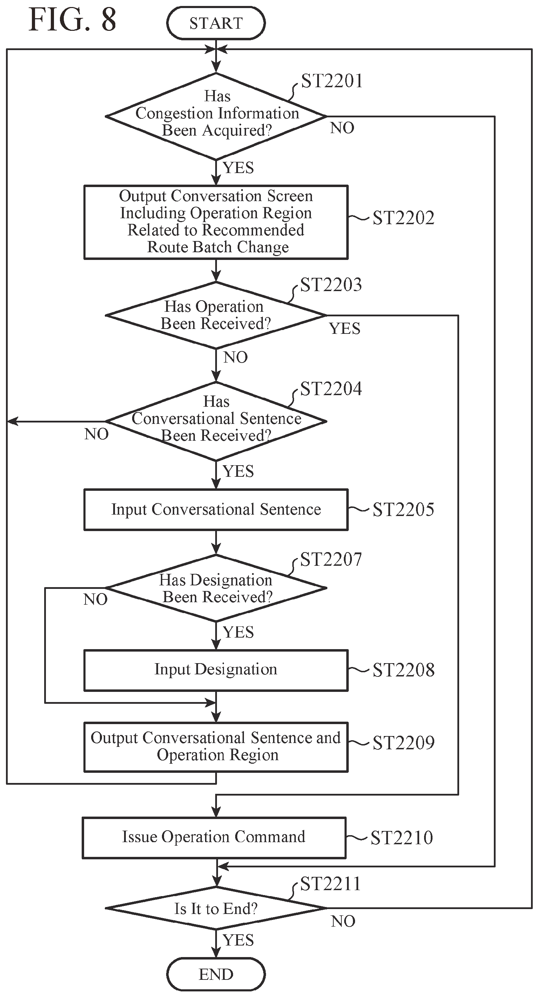

FIG. 8 is a flowchart illustrating an example of second processing in an information processing device according to the second embodiment of the present disclosure.

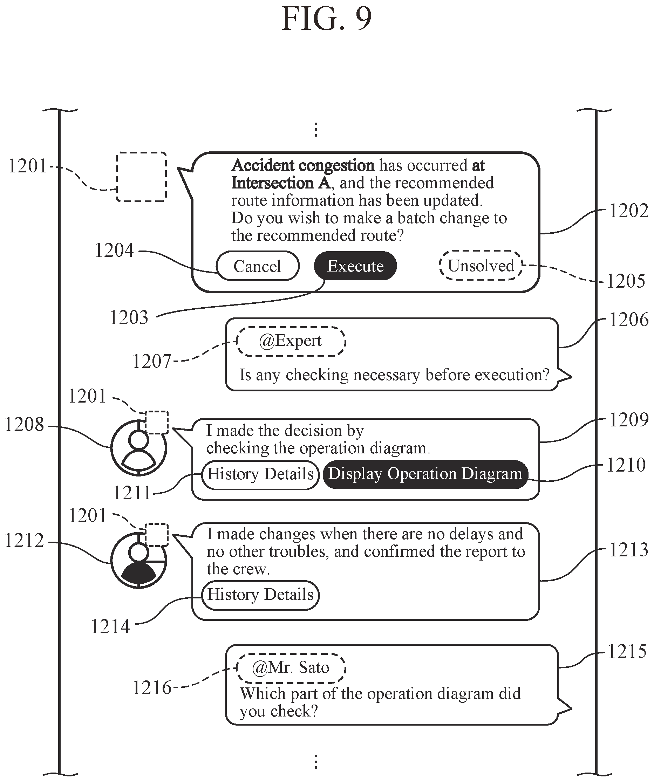

FIG. 9 is a diagram for explaining the functions by the second processing in the information processing device according to the second embodiment of the present disclosure.

The processing illustrated in FIG. 8 is an information processing method implemented by the information processing device 500B.

For example, when the current information is input, the information processing device 500B illustrated in FIG. 4 starts the processing illustrated in FIG. 8. An example of processing to be performed in a case where the current information is congestion information is described herein.

The information processing device 500B then performs a congestion information acquisition determining process (step ST2201).

In the congestion information acquisition determining process, the current information acquiring unit 510 of the information processing device 500B determines whether the current information is current information for which an action is to be taken. In FIG. 6, the current information acquiring unit 510 determines whether the current information is congestion information for which an action is to be taken.

If the current information is determined not to be current information (congestion information) for which an action is to be taken (step ST2201 "NO"), the current information acquiring unit 510 proceeds to the processing in step ST2211.

If the current information is determined to be current information (congestion information) for which an action is to be taken (step ST2201 "YES"), the current information acquiring unit 510 acquires the congestion information as the current information for which an action is to be taken.

The information processing device 500B then performs a process of outputting a conversation screen including an operation region related to a recommended route batch change (step ST2202).

In the process, the conversational information controlling unit 520 of the information processing device 500B outputs a conversation screen including a conversational sentence and an operation region related to the action task by a virtual responder generated on the basis of the current information and know-how information about each of the past responders related to operations of the moving objects 100.

At this point of time, as illustrated in FIG. 9, an icon 1201 indicating the virtual responder and a conversation screen (operation region) 1202 by the virtual responder are output.

The conversation screen (operation region) 1202 includes an execution button (operation region) 1203, a cancel button (operation region) 1204, and an unsolved indication 1205.

The execution button (operation region) 1203 is an operation region that receives an operation of collectively changing to the recommended route due to traffic congestion.

The information processing device 500B then performs an operation reception determining process (step ST2203).

In the operation reception determining process, the action operating signal outputting unit 530 of the information processing device 500B determines whether an operation on the operation region has been received.

If it is determined that the action operating signal outputting unit 530 has not received any operation on the operation region for a certain period of time (step ST2203 "NO"), the information processing device 500B proceeds to the processing in step ST2204.

If the action operating signal outputting unit 530 determines that the action operating signal outputting unit 530 has received an operation on the operation region (step ST2203 "YES"), the information processing device 500B proceeds to the processing in step ST2210.

The information processing device 500B then performs a conversational sentence reception determining process (step ST2204).

In the conversational sentence reception determining process, the conversational sentence receiving unit 540 of the information processing device 500B determines whether a conversational sentence from a user has been received.

In the conversational sentence reception determining process, if the conversational sentence receiving unit 540 determines that the conversational sentence receiving unit 540 of the information processing device 500B has not received any conversational sentence (step ST2204 "NO"), the information processing device 500B proceeds to the processing in step ST2201.

In a case where there is congestion information currently being output in the processing in steps ST2201 and ST2202, the information processing device 500B maintains the output of the conversation screen.

Further, in a case where congestion information is newly acquired in the processing in step ST2201 and step ST2202, the information processing device 500B maintains the output of the conversation screen, and outputs a new conversation screen.

If it is determined that the conversational sentence receiving unit 540 has received a conversational sentence (step ST2204 "YES"), the information processing device 500B proceeds to the processing in step ST2205.

The information processing device 500B then performs a conversational sentence inputting process (step ST2205).

In the conversational sentence inputting process, the conversational sentence receiving unit 540 of the information processing device 500B inputs input conversational sentence information indicating the received input conversational sentence to the conversational information controlling unit 520B.

The information processing device 500B then performs a designation reception determining process (step ST2207).

In the designation reception determining process, the designation receiving unit 550 of the information processing device 500B determines whether designation information for designating the virtual responder has been received via the conversational sentence receiving unit 540.

If the designation receiving unit 550 determines that the designation receiving unit 550 has not received any designation information (step ST2207 "NO"), the information processing device 500B proceeds to the processing in step ST2209.

If the designation receiving unit 550 has received designation information (step ST2207 "YES"), the information processing device 500B then performs a designation inputting process (step ST2208).

In the designation inputting process, the designation receiving unit 550 of the information processing device 500B inputs the designation information to the conversational information controlling unit 520B.

The information processing device 500B then performs a process of outputting a conversational sentence and an operation region (step ST2209).

In the process, the conversational information controlling unit 520B of the information processing device 500B outputs a conversational sentence and an operation region depending on whether or not designation information has been received.

Specifically, if any designation information has not been input (step ST2207 "NO"), the conversational information controlling unit 520B outputs a conversation screen including a conversational sentence and an operation region on the basis of the conversational sentence information.

If the designation receiving unit 550 has received designation information (step ST2207 "YES"), the conversational information controlling unit 520B outputs a conversation screen including a conversational sentence by the virtual responder and an operation region, further on the basis of the designation information in addition to the conversational sentence information.

As illustrated in FIG. 9, the conversational information controlling unit 520B outputs a conversation screen 1206 including a mention (designation information) 1207. For example, the conversational information controlling unit 520B generates a virtual responder corresponding to a plurality of past responders who are experts on the basis of the wording "expert" in the mention (designation information) 1207, and outputs a conversation screen (operation region) 1209 including an operation diagram displaying button (operation region) 1210 and a history detail button (operation region) 1211 related to the action task, together with an icon 1208 indicating the virtual responder.

The information processing device 500B then proceeds to the processing in step ST2201.

In a case where there is congestion information currently being output in the processing in steps ST2201 and ST2202, the information processing device 500B maintains the output of the conversation screen.

Further, in a case where congestion information is newly acquired in the processing in step ST2201 and step ST2202, the information processing device 500B maintains the output of the conversation screen, and outputs a new conversation screen.

If it is determined that the action operating signal outputting unit 530 has received an operation on the operation region (step ST2203 "YES"), the information processing device 500B then performs an operation command issuing process (step ST2210).

In the operation command issuing process, the action operating signal outputting unit 530 of the information processing device 500B receives an operation on the operation region, and outputs a control signal for issuing a command to perform an operation related to the action task.

Here, in FIG. 9, when an operation command is issued via the execution button (operation region) 1203, the conversational information controlling unit 520B then outputs a conversation screen (operation region) 1213 indicating that the operation command has been confirmed, and an icon 1212 indicating a virtual responder different from the virtual responder indicated by the icon 1208. In this manner, a plurality of different virtual responders can be generated in one action task, and a conversation screen can be output for each of the virtual responders.

As illustrated in FIG. 9, when mentions (designation information) 1207 and 1216 are received from the user, conversation screens by the virtual responders corresponding to the designation information are generated.

The information processing device 500B then proceeds to an end determining process (step ST2211).

In the end determining process, the control unit (not shown) of the information processing device 500B determines whether to end the processing being performed by the information processing device 500B. The control unit (not shown) determines whether to end the processing being performed by the information processing device 500B, in accordance with an end command from outside or an execution program.

If the control unit (not shown) determines not to end the processing being performed by the information processing device 500B (step ST2211 "NO"), the process proceeds to the processing in step ST2201, and the repetitive processing is performed starting from the processing in step ST2201.

If the control unit (not shown) determines to end the processing being performed by the information processing device 500B (step ST2211 "YES"), the information processing device 500B ends the processing.

Note that the operation reception determination and the conversational sentence reception determination are performed in this order in the above description, but may be performed in parallel, or the order may be reversed. The same applies in the following description within the range not contradictory to implementation of each function.

An example output by the second function in the second embodiment is now described.

FIG. 9 shows an image of a conversation screen region, and shows, in the conversation screen region, the icon 1201, the conversation screen (operation region) 1202, the execution button (operation region) 1203, the cancel button (operation region) 1204, the unsolved indication 1205, the conversation screen (operation region) 1206), the mention (designation information) 1207), the icon (virtual responder) 1208, the conversation screen (operation region) 1209, the operation diagram displaying button (operation region) 1210, the history detail button (operation region) 1211, the icon (virtual responder) 1212, the conversation screen (operation region) 1213, a history detail button (operation region) 1214, a conversation screen (operation region) 1215, and the mention (designation information) 1216.

As indicated by the icon (virtual responder) 1208 and the icon (virtual responder) 1212, conversation screens can be output so as to show that a plurality of persons responds. Also, outputs are made as if some other operation manager answers users' questions (in a case where there are two or more operation managers, the icons are separately displayed but are shown in one speech balloon).

The information processing device 500B outputs a conversation screen by a virtual responder in accordance with designation from a user. As a result, the user can select a virtual responder suitable for the situation to be handled.

Since it can be handled by the virtual responder, it does not require manpower.

The user can deepen the personal experience, in accordance with the situation to be handled.

The information processing device 500B can indicate that these are automatic responses by attaching a badge (the icon 1201).

Upon receiving mentions (designation information), the information processing device 500B can generate virtual responders for the respective attributes such as "expert", "public road", "resort", "cold district", and "morning shift".

Likewise, a question can be answered with a question by designating a person and an attribute.

The information processing device 500B can receive operations on the icons (operation regions) 1208 and 1212, and make a telephone call to the operation manager indicated by the operated icons.

### [Third Function in Second Embodiment]

An example of processing and an example of an operation image according to a third function of the information processing device 500B are now described.

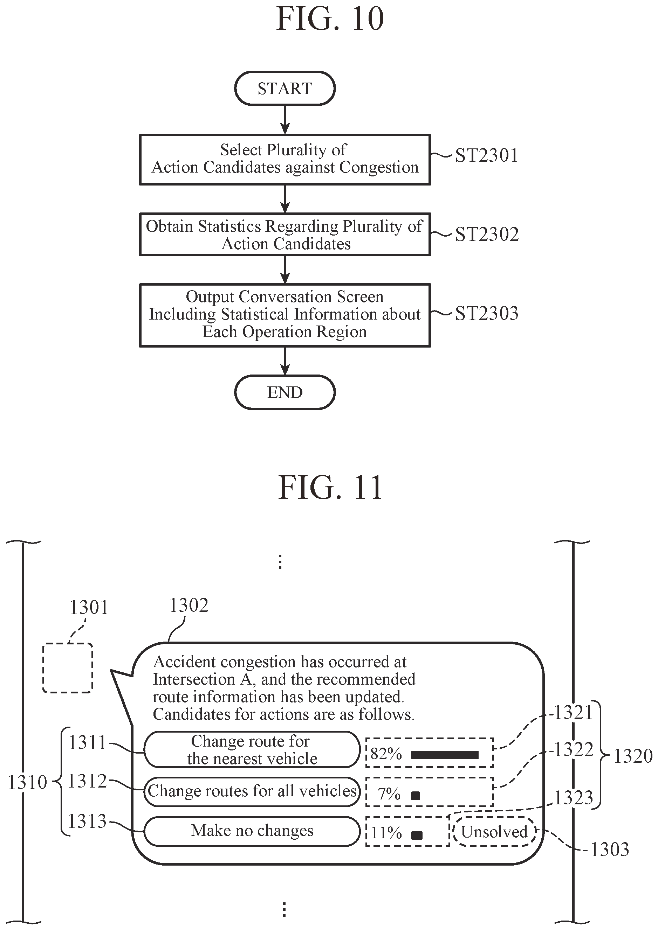

FIG. 10 is a flowchart illustrating an example of third processing in an information processing device according to the second embodiment of the present disclosure.

FIG. 11 is a diagram for explaining the functions by the third processing in the information processing device according to the second embodiment of the present disclosure.

The processing illustrated in FIG. 10 is an information processing method implemented by the information processing device 500B.

For example, after acquiring the current information, the information processing device 500B illustrated in FIG. 4 starts the processing illustrated in FIG. 10. An example of processing to be performed in a case where the current information is congestion information is described herein.

The information processing device 500B then performs a process of selecting a plurality of action candidates for congestion (step ST2301).

In the process, the conversational information controlling unit 520B of the information processing device 500B outputs a conversation screen including a plurality of the operation regions.

The information processing device 500B then performs statistical processing related to the plurality of action candidates (step ST2302).

In the processing, the statistical information outputting unit 524 in the determination-assisting information generating unit 521 of the information processing device 500B outputs statistical information about the operation candidates for each of the operation regions. The statistical information outputting unit 524 calculates statistical information based on know-how information including metadata of each of the responders. The statistical information outputting unit 524 outputs the statistical information as the determination-assisting information.

The information processing device 500B then performs a process of outputting a conversation screen including the statistical information about each operation region (step ST2303).

In the process, as illustrated in FIG. 11, for example, the conversational information controlling unit 520B of the information processing device 500B outputs a conversation screen (operation region) 1302 including the selection-assisting information 1320 (1321, 1322, and 1323) corresponding to the respective operation regions 1310 (1311, 1312, and 1313).

An example display by the third function is now described. FIG. 11 shows an icon 1301, the conversation screen (operation region) 1302, an unsolved indication 1303, an operation region 1310, an operation region (action operating candidate) 1311, an operation region (action operating candidate) 1312, an operation region (action operating candidate) 1313, selection-assisting information 1320, statistical information 1321, statistical information 1322, and statistical information 1323. As illustrated in FIG. 11, a conversation screen including operation regions for the respective action candidates is output. Also, each of the action candidates can be displayed together with the statistical information (recommendation level in %).

### [Fourth Function in Second Embodiment]

An example of processing and an example of an operation image according to a fourth function of the information processing device 500C are now described.

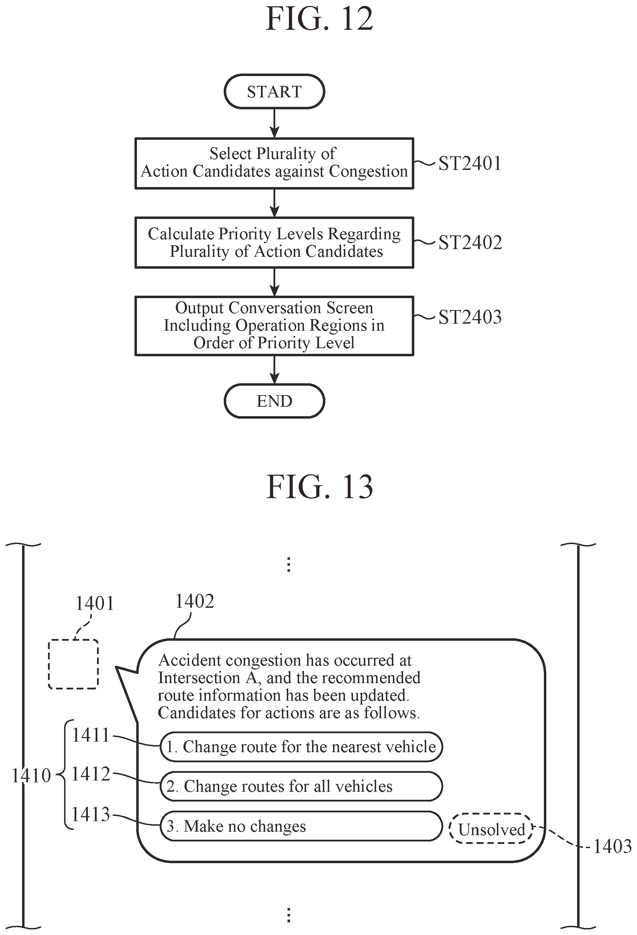

FIG. 12 is a flowchart illustrating an example of fourth processing in the information processing device according to the second embodiment of the present disclosure.

FIG. 13 is a diagram for explaining the functions by the fourth processing in the information processing device according to the second embodiment of the present disclosure.

The processing illustrated in FIG. 12 is an information processing method implemented by the information processing device 500B.

For example, after acquiring the current information, the information processing device 500B illustrated in FIG. 4 starts the processing illustrated in FIG. 12. An example of processing to be performed in a case where the current information is congestion information is described herein.

The information processing device 500B then performs a process of selecting a plurality of action candidates for congestion (step ST2401).

In the process, the conversational information controlling unit 520B of the information processing device 500B selects a plurality of operation candidates related to the action task based on know-how information using congestion information, and generates operation candidate information about each operation candidate.

The information processing device 500B then performs a priority level calculating process related to the plurality of action candidates (step ST2402).

In the priority level calculating process, the priority level calculating unit 525 of the information processing device 500B calculates the priority levels of the operation candidates related to the action task. The priority level calculating unit 525 calculates the priority levels of the operation candidates related to the action task, on the basis of the know-how information related to the actions selected as the action candidates.

The priority level calculating unit 525 outputs the priority level of each of the operation candidates related to the operation regions as the determination-assisting information.

The information processing device 500B then performs a process of outputting a conversation screen including operation regions in order of priority level (step ST2403).

In the process, the conversational information controlling unit 520B of the information processing device 500B acquires the priority level of each operation candidate as the determination-assisting information from the priority level calculating unit 525, and make outputs in order of priority level.

After performing the processing in step ST2403, the information processing device 500B ends the processing illustrated in FIG. 12.

An example display by the fourth function is now described.

FIG. 13 shows an icon 1401, a conversation screen (operation region) 1402, an unsolved indication 1403, an operation region 1410, an operation region (an action operating candidate, selection-assisting information) 1411, an operation region (an action operating candidate, selection-assisting information) 1412, and an operation region (action operating candidate, selection-assisting information) 1413.

As illustrated in FIG. 13, by outputting the priority order of the action candidates on the basis of the know-how information, it is possible to indicate more appropriate action candidates, utilizing accumulation of the know-how information.

Alternatively, the priority levels may be output.

### [Fifth Function in Second Embodiment]

An example of processing and an example of an operation image according to a fifth function of the information processing device 500C are now described.

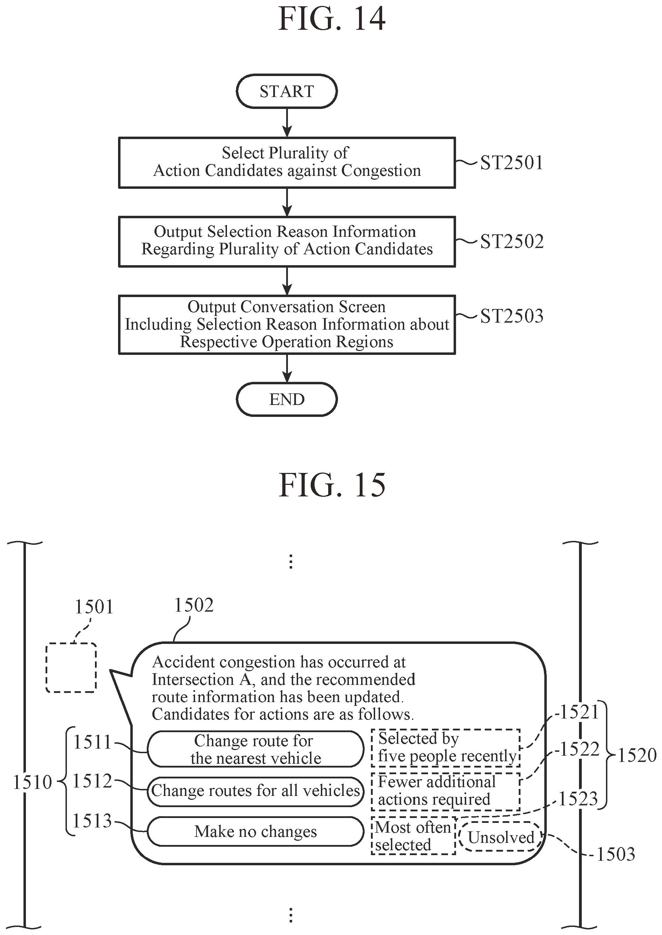

FIG. 14 is a flowchart illustrating an example of fifth processing in an information processing device according to the second embodiment of the present disclosure.

FIG. 15 is a diagram for explaining the functions by the fifth processing in the information processing device according to the second embodiment of the present disclosure.

The processing illustrated in FIG. 14 is an information processing method implemented by the information processing device 500B.

For example, after acquiring the current information, the information processing device 500B illustrated in FIG. 4 starts the processing illustrated in FIG. 14. An example of processing to be performed in a case where the current information is congestion information is described herein.

The information processing device 500B then performs a process of selecting a plurality of action candidates for congestion (step ST2501).

In the process, the conversational information controlling unit 520B of the information processing device 500B outputs a conversation screen including a conversational sentence and an operation region related to the action task by a virtual responder generated on the basis of congestion information (the current information) and know-how information about each of the past responders related to operations of the moving objects 100. The conversational information controlling unit 520B selects a plurality of action candidates.

The information processing device 500B then performs a process of outputting selection reason information related to the plurality of action candidates (step ST2502).

In the process, the supplementary information outputting unit 526 of the information processing device 500B outputs selection reason information including the reason for selecting an operation region as the determination-assisting information for each operation related to the operation regions.

The information processing device 500B then performs a process of outputting a conversation screen including the selection reason information about each operation region (step ST2503).

In the process, the conversational information controlling unit 520B of the information processing device 500B receives the determination-assisting information, and outputs a conversation screen further using the determination-assisting information.

After performing the processing in step ST2503, the information processing device 500B ends the processing illustrated in FIG. 14.

The fifth function outputs a conversation screen including the context of the selection reasons for the action candidates.

FIG. 15 shows an icon 1501, a conversation screen (operation region) 1502, an unsolved indication 1503, an operation region 1510, an operation region (action operating candidate) 1511, an operation region (action operating candidate) 1512, an operation region (action operating candidate) 1513, selection-assisting information 1520, supplementary information 1521, supplementary information 1522, and supplementary information 1523.

For example, as illustrated in FIG. 15, a conversation screen including the selection-assisting information 1520 (1521, 1522, and 1523) corresponding to the respective operation regions (action operating candidates) 1510 (1511, 1512, and 1513) for the respective action candidates is output.

As a result, by outputting the reasons for the selection, it is possible to assist the determination as to whether it is suitable for the situation.

Also, it is possible to output a conversation screen indicating a natural response like an answer obtained when the reason for the selection was actually asked to a responder in the past.

### [Sixth Function in Second Embodiment]

An example of processing and an example of an operation image according to a sixth function of the information processing device 500B are now described.

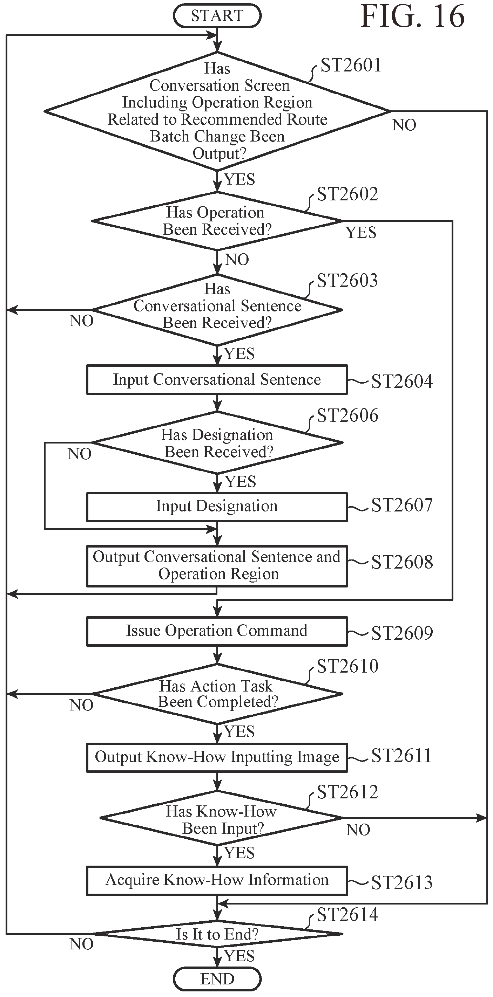

FIG. 16 is a flowchart illustrating an example of sixth processing in an information processing device according to the second embodiment of the present disclosure.

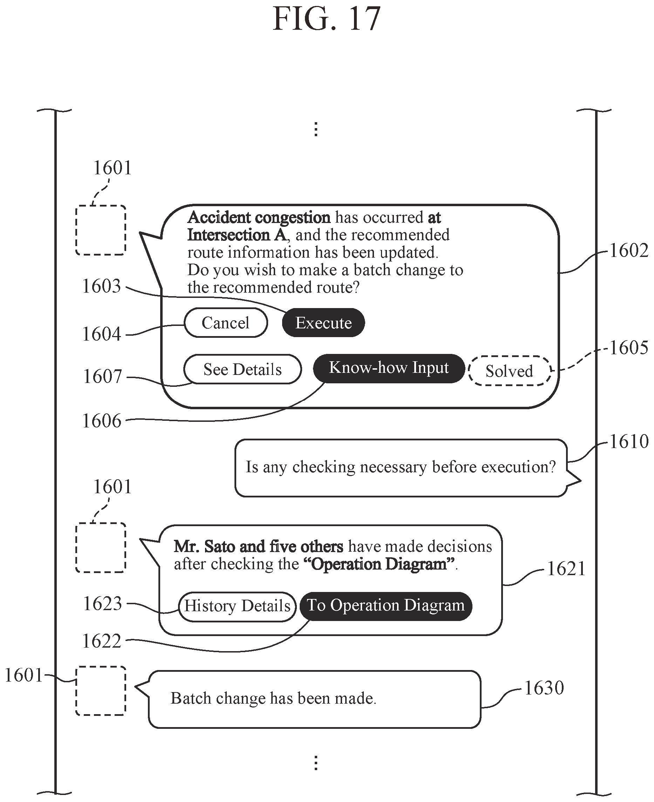

FIG. 17 is a diagram for explaining the functions by the sixth processing in the information processing device according to the second embodiment of the present disclosure.

The processing illustrated in FIG. 16 is an information processing method implemented by the information processing device 500B.

For example, after acquiring the current information, the information processing device 500B illustrated in FIG. 4 starts the processing illustrated in FIG. 16. An example of processing to be performed in a case where the current information is congestion information is described herein.

The processing from step ST2601 to step ST2609 has the same details as the details of the already-described processing, and therefore, explanation thereof is partially omitted herein.

The information processing device 500B then performs a process of determining whether a conversation screen including an operation region related to a recommended route batch change has been output (step ST2601).

In the process, the conversational information controlling unit 520 of the information processing device 500B determines whether a conversation screen that is based on acquired congestion information and includes an operation region related to a recommended route batch change has been output.

Here, in the process, the information processing device 500B may perform the same processing as the processing in steps ST2201 and ST2202 described above.

The information processing device 500B then performs an operation reception determining process (step ST2602).

In the operation reception determining process, the action operating signal outputting unit 530 of the information processing device 500B determines whether an operation on the operation region has been received.

If it is determined that the action operating signal outputting unit 530 has not received any operation on the operation region for a certain period of time (step ST2602 "NO"), the information processing device 500B proceeds to the processing in step ST2603.

If the action operating signal outputting unit 530 determines that the action operating signal outputting unit 530 has received an operation on the operation region (step ST2602 "YES"), the information processing device 500B proceeds to the processing in step ST2609.

The information processing device 500B then performs a conversational sentence reception determining process (step ST2603).

In the conversational sentence reception determining process, the conversational sentence receiving unit 540 of the information processing device 500B determines whether a conversational sentence from a user has been received.

In the conversational sentence reception determining process, if the conversational sentence receiving unit 540 determines that the conversational sentence receiving unit 540 of the information processing device 500B has not received any conversational sentence (step ST2603 "NO"), the information processing device 500B proceeds to the processing in step ST2601.

If it is determined that the conversational sentence receiving unit 540 has received a conversational sentence (step ST2603 "YES"), the information processing device 500B proceeds to the processing in step ST2604.

In a case where there is congestion information currently being output in the processing in steps ST2601 and ST2602, the information processing device 500B maintains the output of the conversation screen.

Further, in a case where congestion information is newly acquired in the processing in step ST2601 and step ST2602, the information processing device 500B maintains the output of the conversation screen, and outputs a new conversation screen.

The information processing device 500B then performs a conversational sentence inputting process (step ST2604).

In the conversational sentence inputting process, the conversational sentence receiving unit 540 of the information processing device 500B inputs input conversational sentence information indicating the received input conversational sentence to the conversational information controlling unit 520B.

The information processing device 500B then performs a designation reception determining process (step ST2606).

In the designation reception determining process, the designation receiving unit 550 of the information processing device 500B determines whether designation information for designating the virtual responder has been received.

If the designation receiving unit 550 has not received any designation information for designating the virtual responder (step ST2606 "NO"), the information processing device 500B proceeds to the processing in step ST2608.

If the designation information for designating the virtual responder has been received (step ST2606 "YES"), the designation receiving unit 550 receives the designation information for designating the virtual responder.

If the designation receiving unit 550 has received the designation information for designating the virtual responder (step ST2606 "YES"), the information processing device 500B then performs a designation inputting process (step ST2607).

In the designation inputting process, the designation receiving unit 550 of the information processing device 500B inputs the designation information to the conversational information controlling unit 520B.

The information processing device 500B then performs a process of outputting a conversational sentence and an operation region (step ST2608).

In the process, the conversational information controlling unit 520B of the information processing device 500B outputs a conversational sentence and an operation region depending on whether or not designation information has been received.

Specifically, if any designation information has not been input (step ST2606 "NO"), the conversational information controlling unit 520B outputs a conversation screen including a conversational sentence and an operation region on the basis of conversational sentence information.

If the designation receiving unit 550 has received the designation information (step ST2606 "YES"), the designation information is input from the designation receiving unit 550, and the conversational information controlling unit 520B outputs a conversation screen including a conversational sentence by the virtual responder and an operation region, further on the basis of the designation information in addition to the conversational sentence information.

The information processing device 500B then proceeds to the processing in step ST2601.

If the action operating signal outputting unit 530 determines that the action operating signal outputting unit 530 has received an operation on the operation region (step ST2602 "YES"), the information processing device 500B then performs an operation command issuing process (step ST2609).

The information processing device 500B then performs an action task completion determining process (step ST2610).

In the action task completion determining process, the conversational information controlling unit 520B of the information processing device 500B determines whether the action task has been completed.

If the know-how information acquiring unit 560 determines that the action task has not been completed (step ST2610 "NO"), the information processing device 500B proceeds to the processing in step ST2601.

If the know-how information acquiring unit 560 determines that the action task has been completed (step ST2610 "YES"), the information processing device 500B proceeds to the processing in step ST2611.

The information processing device 500B then performs a know-how inputting image outputting process (step ST2611).

In the know-how inputting image outputting process, when a command to perform an operation related to the action task is issued, the conversational information controlling unit 520B of the information processing device 500B outputs a conversation screen including a know-how inputting region for receiving an input of the know-how information related to the responder in the action task completion determining process by the information processing device 500B.

The information processing device 500B then performs a know-how input determining process (step ST2612).

In the know-how input determining process, the know-how information acquiring unit 560 of the information processing device 500B determines whether know-how information has been input.

If the know-how information acquiring unit 560 determines that any know-how information has not been input for a certain period of time (step ST2612 "NO"), the information processing device 500B proceeds to an end determining process (step ST2614).

If the know-how information acquiring unit 560 determines that know-how information has been input (step ST2612 "YES"), the information processing device 500B proceeds to step ST2613.

The information processing device 500B then performs a know-how information acquiring process (step ST2613).

In the know-how information acquiring process, the know-how information acquiring unit 560 of the information processing device 500B attaches the metadata of each responder to the know-how information acquired via the know-how inputting region, and then stores the know-how information into a storage unit (not shown).

After performing the processing in step ST2613, the information processing device 500B ends the series of processes illustrated in FIG. 16.

An example of a conversation screen by the sixth function is now described.

FIG. 17 shows an icon 1601, a conversation screen (operation region) 1602, an execution button (operation region) 1603, a cancel button (operation region) 1604, an image (solved indication) 1605, a know-how input (operation region) 1606, a detail request (operation region) 1607, a conversation screen 1610, a conversation screen (operation region) 1620, a conversation screen (operation region) 1621, an operation diagram displaying button (operation region) 1622, a history detail button (operation region) 1623, and a conversation screen 1630.

When the execution button 1603 is operated, and the action is completed, an operation region such as the know-how input (operation region) 1606 is output. When an operation on the know-how input (operation region) 1606 is received, it is possible to have an input of know-how information.

### [Seventh Function in Second Embodiment]

An example of processing and an example of an operation image according to a seventh function of the information processing device 500C are now described.

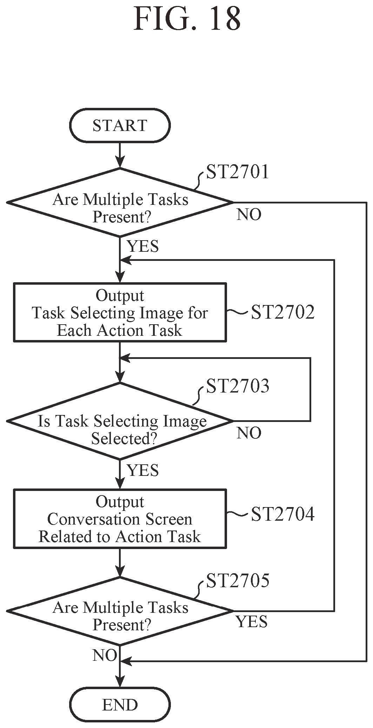

FIG. 18 is a flowchart illustrating an example of seventh processing in an information processing device according to the second embodiment of the present disclosure.

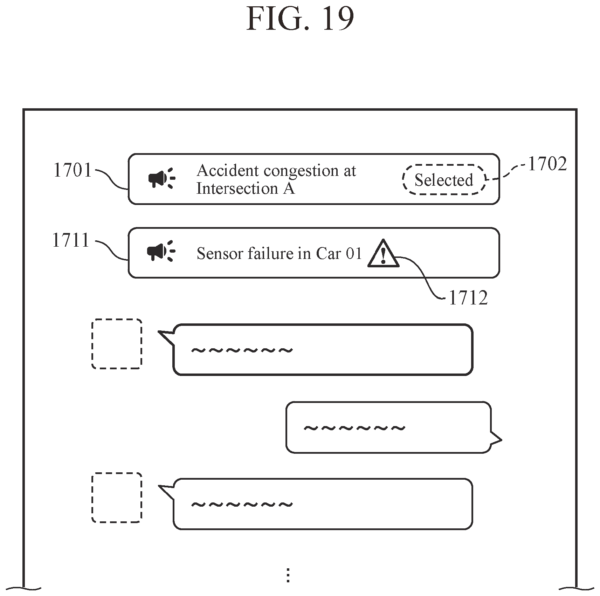

FIG. 19 is a diagram for explaining the functions by the seventh processing in the information processing device according to the second embodiment of the present disclosure.

The processing illustrated in FIG. 18 is an information processing method implemented by the information processing device 500B.

For example, after acquiring the current information, the information processing device 500B illustrated in FIG. 4 starts the processing illustrated in FIG. 18. An example of processing to be performed in a case where the current information is congestion information is described herein.

The information processing device 500B then performs a multiple-task presence determining process (step ST2701).

In the multiple-task presence determining process, if a plurality of action tasks to be handled is not present at the same time (step ST2701 "NO"), the conversational information controlling unit 520B of the information processing device 500B ends the processing illustrated in FIG. 18.

In the multiple-task presence determining process, if the conversational information controlling unit 520B of the information processing device 500B determines that a plurality of action tasks to be handled is present at the same time (step ST2701 "YES"), the information processing device 500B proceeds to step ST2702.

The information processing device 500B then performs a process of outputting a task selecting image for each action task (step ST2702).

In the process, the conversational information controlling unit 520B of the information processing device 500B newly outputs a task selecting image for each action task.

The information processing device 500B then performs a task-selecting-image selection determining process (step ST2703).

In the task-selecting-image selection determining process, the conversational information controlling unit 520B of the information processing device 500B determines whether a task selecting image has been selected.

If the conversational information controlling unit 520B determines that any task selecting image has not been selected (step ST2703 "NO"), the determination is repeated.

If the conversational information controlling unit 520B determines that a task selecting image has been selected (step ST2703 "YES"), the processing proceeds to step ST2704.

The information processing device 500B then performs a process of outputting a conversation screen related to an action task (step ST2704).

In the process, the conversational information controlling unit 520B of the information processing device 500B outputs a conversation screen related to an action task.

The information processing device 500B then performs multiple-task presence determination (step ST2705).

In the multiple-task presence determining process, if the conversational information controlling unit 520B of the information processing device 500B determines that there are multiple tasks (step ST2705 "YES"), the information processing device 500B proceeds to processing in ST2702.

After determining that multiple tasks are not present in the processing in step ST2705, the information processing device 500B ends the processing illustrated in FIG. 18.

An example of a conversation screen by the seventh function is now described.

FIG. 19 shows a task selecting image (operation region) 1701, a selection indication 1702, a task selecting image (operation region) 1711, and an action required indication 1712.

FIG. 19 illustrates a case where there are the multiple action tasks of an action task "incident congestion at Intersection A" and an action task "sensor failure in Vehicle 01", and the task selecting images 1701 and 1711 for the respective action tasks are newly output. When a selecting operation is received via the task selecting image (operation region) 1701 and the task selecting image (operation region) 1711, a conversation screen of the task selecting image (operation region) 1701 and the task selecting image (operation region) 1711 according to the selecting operation can be selected and output.

The selection indication 1702 indicates a state in which the action task "incident congestion at Intersection A" is selected.

The action required indication 1712 indicates that it is a non-completed action task on the basis of a status flag indicating an action status.

According to the above disclosure, the present disclosure can assist a selecting operation in a case where a conversation screen including operation regions related to a plurality of action candidates is output.

The present embodiment further discloses the following configuration.

An information processing device further including
a conversational sentence receiving unit to receive a conversational sentence of a user, wherein
the conversational information controlling unit outputs the conversation screen, further using the conversational sentence received by the conversational sentence receiving unit.

With this configuration, it is possible to provide an information processing device that can assist an action in an interactive manner so that a user (operation manager) can take an appropriate action for an event for which an action should be taken.

Further, the present disclosure has an effect of being able to provide an information processing method, the information processing program, or an operation management system that has the same effects as above, by applying the above configuration to the information processing method, the information processing program, or the operation management system.

The present embodiment further discloses the following configuration.

An information processing device further including
a designation receiving unit to receive designation information for designating the virtual responder via the conversational sentence receiving unit, wherein
the conversational information controlling unit outputs the conversation screen including a conversational sentence by the virtual responder, further on a basis of the designation information.

With this configuration, it is possible to provide an information processing device that can provide a user with a conversational sentence by a virtual person in charge as wished by a user (operation manager) depending on an event that has occurred.

Further, the present disclosure has an effect of being able to provide an information processing method, the information processing program, or an operation management system that has the same effects as above, by applying the above configuration to the information processing method, the information processing program, or the operation management system.

The present embodiment further discloses the following configuration.

An information processing device in which
the conversation screen including the conversational sentence by the virtual responder output by the conversational information controlling unit includes a plurality of operation regions as the at least one operation region.

With this configuration, it is possible to provide an information processing device that enables selection from among a plurality of operation candidates related to an action task by a virtual responder.

Further, the present disclosure has an effect of being able to provide an information processing method, the information processing program, or an operation management system that has the same effects as above, by applying the above configuration to the information processing method, the information processing program, or the operation management system.

The present embodiment further discloses the following configuration.

An information processing device further including
a conversational sentence receiving unit to receive a conversational sentence of a user, wherein
the conversational information controlling unit outputs the conversation screen, further using the conversational sentence received by the conversational sentence receiving unit, and
the conversation screen including the conversational sentence by the virtual responder output by the conversational information controlling unit includes a plurality of operation regions as the at least one operation region.

With this configuration, it is possible to provide an information processing device that can assist an action in an interactive manner so that a user (operation manager) can take an appropriate action for an event for which an action should be taken. Also, it is possible to provide an information processing device that enables selection from among a plurality of operation candidates related to an action task by a virtual responder.

Further, the present disclosure has an effect of being able to provide an information processing method, the information processing program, or an operation management system that has the same effects as above, by applying the above configuration to the information processing method, the information processing program, or the operation management system.

The present embodiment further discloses the following configuration.

An information processing device in which
the conversation screen including the conversational sentence by the virtual responder output by the conversational information controlling unit includes a plurality of operation regions as the at least one operation region.

With this configuration, it is possible to provide an information processing device that can provide a user with a conversational sentence by a virtual person in charge as wished by a user (operation manager) depending on an event that has occurred. It is possible to provide an information processing device that enables selection from among a plurality of operation candidates related to an action task by a virtual responder.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the conversation screen including the conversational sentence by the virtual responder output by the conversational information controlling unit includes a plurality of operation regions as the at least one operation region,
the information processing device further includes
a determination-assisting information generating unit to generate determination-assisting information on a basis of the action task for the plurality of operation regions and an operation history related to the action task, wherein
the conversation screen output by the conversational information controlling unit includes the determination-assisting information for each of the plurality of operation regions.

With this configuration, it is possible to provide an information processing device that can assist determination as to selection from among a plurality of operation candidates.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device further including
a determination-assisting information generating unit to generate determination-assisting information on a basis of the action task for the plurality of operation regions and an operation history related to the action task, wherein
the conversation screen output by the conversational information controlling unit includes the determination-assisting information for each of the plurality of operation regions.

With this configuration, it is possible to provide an information processing device that can assist determination as to selection from among a plurality of operation candidates.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device further including
a determination-assisting information generating unit to generate determination-assisting information on a basis of the action task for the plurality of operation regions and an operation history related to the action task, wherein
the conversation screen output by the conversational information controlling unit includes the determination-assisting information for each of the plurality of operation regions.

With this configuration, it is possible to provide an information processing device that can assist determination as to selection from among a plurality of operation candidates.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the determination-assisting information is statistical information based on know-how information including metadata of each responder.

With this configuration, it is possible to provide an information processing device that can assist selection from among a plurality of operation candidates on the basis of a result of statistics of know-how information.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the determination-assisting information is a priority level of an operation related to the at least one operation region.

With this configuration, it is possible to provide an information processing device that can assist selection from among a plurality of operation candidates using priority levels based on know-how information.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the determination-assisting information is selection reason information including a reason for selecting the at least one operation region.

With this configuration, it is possible to provide an information processing device that can assist selection using a selection reason based on know-how information.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which,
when an operation command related to the action task is issued, the conversational information controlling unit outputs the conversation screen including a know-how inputting region for receiving an input of know-how information related to a responder, and
the information processing device further comprises a know-how information acquiring unit to store the know-how information acquired via the know-how inputting region, metadata of each responder being attached to the know-how information.

With this configuration, it is possible to provide an information processing device that can accumulate a result of the current action in know-how information.

With this configuration, new know-how information can be further accumulated, and thus, it is possible to provide a more appropriate action assist to the user.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the conversational information controlling unit newly outputs a task selecting image for each action task when a plurality of action tasks to be handled is present at a same time, and outputs the conversation screen related to a selected action task when the action task is selected via the task selecting image.

With this configuration, it is possible to provide an information processing device that can output a conversation screen for each action task when a plurality of action tasks to be handled is present at the same time.

Further, the present disclosure has an effect of being able to provide an information processing method, the information processing program, or an operation management system that has the same effects as above, by applying the above configuration to the information processing method, the information processing program, or the operation management system.

### Third Embodiment.

A third embodiment concerns an embodiment of a configuration for further achieving a function of linking an operation on a conversation screen and an operation on a detailed information screen to each other, in addition to the functions of a configuration according to the first embodiment or the second embodiment.

In the third embodiment, explanation of the same components as the already-described components according to the first embodiment and the second embodiment among the components according to the third embodiment is omitted as appropriate.

An example configuration of an information processing device according to the third embodiment of the present disclosure is now described.

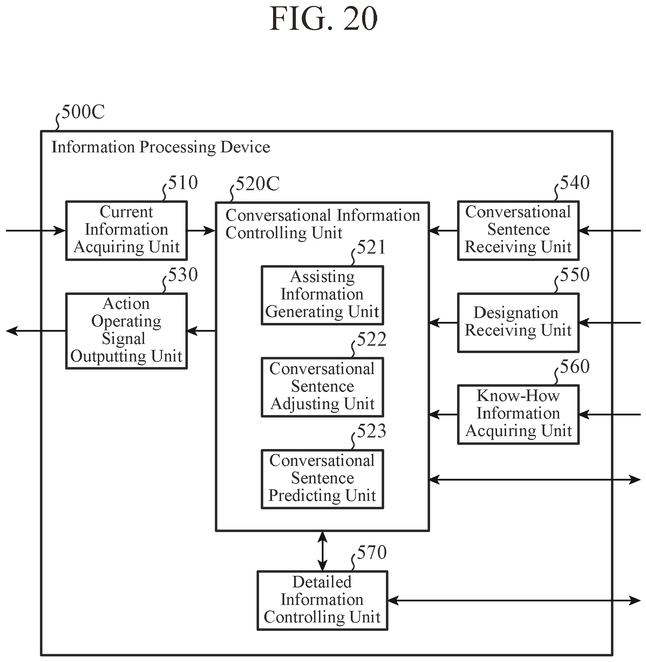

FIG. 20 is a diagram illustrating an example configuration of the information processing device according to the third embodiment of the present disclosure.

An information processing device 500C has a function of linking a conversation screen and a detailed information screen to each other.

The information processing device 500C includes a current information acquiring unit 510, a conversational information controlling unit 520, a determination-assisting information generating unit 521, a conversational sentence adjusting unit 522, a conversational sentence predicting unit 523, a statistical information outputting unit 524, a priority level calculating unit 525, a supplementary information outputting unit 526, an action operating signal outputting unit 530, a conversational sentence receiving unit 540, a designation receiving unit 550, a know-how information acquiring unit 560, and a detailed information controlling unit 570.

Like the already-described current information acquiring unit 510, the current information acquiring unit 510 acquires current information that is information received at the current time.

The conversational information controlling unit 520 outputs voice data using a conversational sentence predicted by the conversational sentence predicting unit 523.

Like the already-described determination-assisting information generating unit 521, the determination-assisting information generating unit 521 generates determination-assisting information on the basis of the action task for each operation region and an operation history related to the action task.

The conversational sentence adjusting unit 522 adjusts the conversational sentence of the user, on the basis of an operation by the user.

In this case, the conversational information controlling unit outputs the conversation screen including the conversational sentence adjusted by the conversational sentence adjusting unit.

The conversational sentence predicting unit 523 predicts a candidate for a conversational sentence of a user.

The conversational sentence predicting unit 523 predicts a candidate for a conversational sentence of a user, on the basis of feature information indicating the features of the action by the user as pre-stored, the current information, and the know-how information.

In relation to this configuration, the conversational sentence receiving unit 540 receives a conversational sentence selected from among candidate conversational sentences predicted by the conversational sentence predicting unit 523.

Like the already-described statistical information outputting unit 524, the statistical information outputting unit 524 outputs statistical information about operation candidates related to the operation region.

Like the already-described priority level calculating unit 525, the priority level calculating unit 525 calculates the priority levels of the operation candidates related to the action task.

Like the already-described supplementary information outputting unit 526, the supplementary information outputting unit 526 outputs selection reason information including the reason for selecting an operation region as the determination-assisting information for each operation related to the operation region.

Like the already-described action operating signal outputting unit 530, the action operating signal outputting unit 530 receives an operation on the operation region, and outputs a control signal for issuing a command to perform an operation related to the action task.

Like the already-described conversational sentence receiving unit 540, the conversational sentence receiving unit 540 receives a conversational sentence of a user.

Like the already-described designation receiving unit 550, the designation receiving unit 550 receives designation information for designating the virtual responder via the conversational sentence receiving unit 540.

Like the already-described know-how information acquiring unit 560, when a command to perform an operation related to the action task is issued, the know-how information acquiring unit 560 outputs a conversation screen including a know-how inputting region for receiving an input of the know-how information related to the responder. The know-how information acquiring unit 560 stores the know-how information acquired via the know-how inputting region, with the metadata of each of the responders attached thereto.

The conversation screen output by the conversational information controlling unit 520 includes a detail request operating region that receives an operation of requesting details of the action task shown in the conversation screen.

When receiving a detail request via the detail request operating region, the detailed information controlling unit 570 acquires the current information related to the action task for which the detail request has been made, and outputs a detailed information screen based on the current information.

The detailed information controlling unit 570 outputs the detailed information screen including a selecting operation region for receiving a selecting operation.

In the case of having this configuration, the conversational information controlling unit 520 outputs the conversation screen using the current information related to the selecting operation region on which the selecting operation has been performed.

An example of processing to be performed by the information processing device according to the third embodiment of the present disclosure is now described.

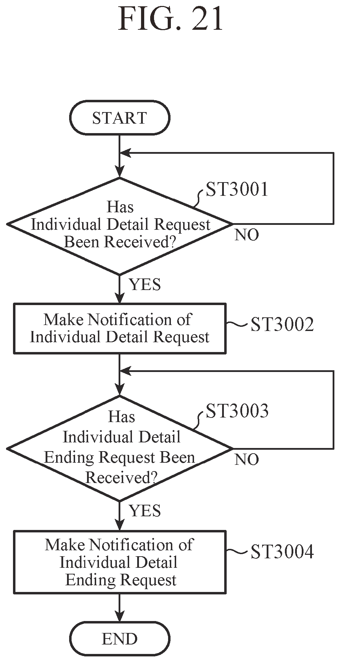

FIG. 21 is a flowchart illustrating an example of processing to be performed by the conversational information controlling unit of the information processing device according to the third embodiment of the present disclosure.

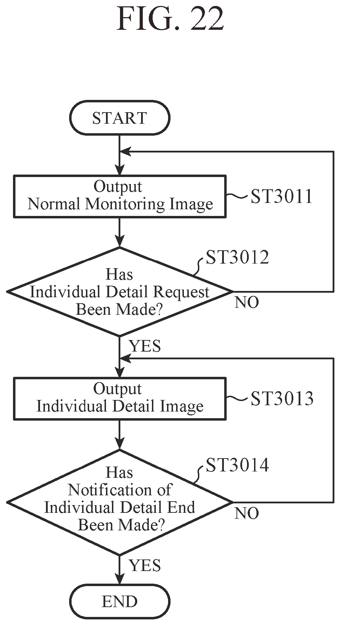

FIG. 22 is a flowchart illustrating an example of processing to be performed by the detailed information controlling unit of the information processing device according to the third embodiment of the present disclosure.

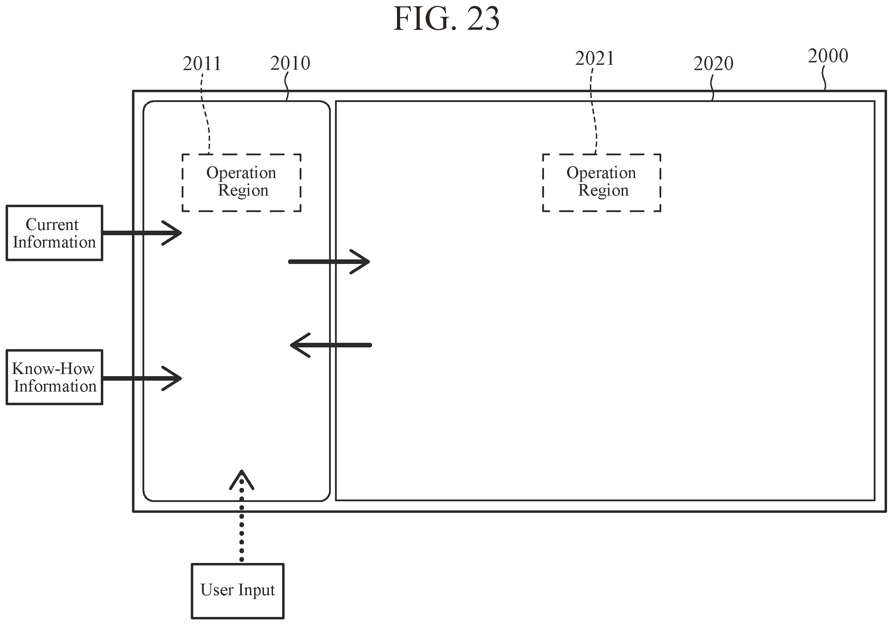

FIG. 23 is a diagram illustrating an overview of functions in the information processing device according to the third embodiment of the present disclosure.

The processing illustrated in FIG. 21 is an information processing method implemented by the conversational information controlling unit 520C of the information processing device 500C.

For example, the information processing device 500C illustrated in FIG. 20 starts the processing illustrated in FIG. 21 in a state where an operation managing image at a time of normal monitoring is displayed via an input/output device.

The information processing device 500C then performs an individual detail request reception determining process (step ST3001).

In the individual detail request reception determining process, the conversational information controlling unit 520C of the information processing device 500C determines whether an individual detail request has been received via a conversation screen.

If it is determined that any individual detail request has not been received via a conversation screen (step ST3001 "NO"), the conversational information controlling unit 520C repeats the processing in step ST3001.

If it is determined that an individual detail request has been received via a conversation screen (step ST3001 "YES"), the conversational information controlling unit 520C proceeds to the processing in step ST3002.

The information processing device 500C then performs an individual detail request notifying process (step ST3002).

In the individual detail request notifying process, the conversational information controlling unit 520C of the information processing device 500C notifies the detailed information controlling unit 570 that an individual detail request has been received.

The information processing device 500C then performs an individual-detail-ending-request reception determining process (step ST3003).

In the individual-detail-ending-request reception determining process, the conversational information controlling unit 520C of the information processing device 500C determines whether an individual detail ending request has been received via a conversation screen.

If it is determined that any individual detail ending request has not been received via a conversation screen (step ST3003 "NO"), the conversational information controlling unit 520C repeats the processing in step ST3003.

If it is determined that an individual detail ending request has been received via a conversation screen (step ST3003 "YES"), the conversational information controlling unit 520C proceeds to the processing in step ST3004.

The information processing device 500C then performs an individual-detail-ending-request notifying process (step ST3004).

In the individual-detail-ending-request notifying process, when an individual detail ending request has been received, the conversational information controlling unit 520C of the information processing device 500C notifies the detailed information controlling unit 570 of the individual detail ending request.

After performing the individual-detail-ending-request notification in the processing in step ST3004, the information processing device 500C then ends the series of processes according to FIG. 21.

The processing illustrated in FIG. 22 is an information processing method implemented by the detailed information controlling unit 570 of the information processing device 500C.

For example, the information processing device 500C illustrated in FIG. 20 starts the processing illustrated in FIG. 22 in a state where an operation managing image at a time of normal monitoring is displayed via the input/output device.

The information processing device 500C then performs a normal monitoring image outputting process (step ST3011).

In the normal monitoring image outputting process, the detailed information controlling unit 570 of the information processing device 500C outputs a detailed information screen that is preset for normal management, to the input/output device 300.

The information processing device 500C then performs an individual detail request determining process (step ST3012).

In the individual detail request determining process, the detailed information controlling unit 570 of the information processing device 500C determines whether an individual detail request has been made from the conversational information controlling unit 520C.

If it is determined that any individual detail request has not been made from the conversational information controlling unit 520C (step ST3012 "NO"), the detailed information controlling unit 570 returns to the processing in step ST3011.

If it is determined that an individual detail request has been made from the conversational information controlling unit 520C (step ST3012 "YES"), the detailed information controlling unit 570 proceeds to the processing in step ST3013.

The information processing device 500C then performs an individual detail image outputting process (step ST3013).

In the individual detail image outputting process, the detailed information controlling unit 570 of the information processing device 500C acquires the current information from the current information acquiring unit 510, and outputs an individual detail image, using the current information related to the individual detail request.

The information processing device 500C then performs an individual detail end determining process (step ST3014).

In the individual detail end determining process, the detailed information controlling unit 570 of the information processing device 500C determines whether a notification of an individual detail end has been made from the conversational information controlling unit 520C.

If it is determined that any notification of an individual detail end has not been made from the conversational information controlling unit 520C (step ST3014 "NO"), the detailed information controlling unit 570 proceeds to the processing in step ST3013.

If it is determined that a notification of an individual detail end has been made from the conversational information controlling unit 520C (step ST3014 "YES"), the detailed information controlling unit 570 ends the processing.

When the output of an individual detail image comes to an end in the processing in step ST3014, the information processing device 500C then ends the series of processes according to FIG. 22.

An overview of the functions of the third embodiment is now described.

FIG. 23 illustrates an operation managing image 2000, a conversation screen displaying region 2010, and a detailed information screen 2020. The operation managing image 2000 is formed with the conversation screen displaying region 2010 and the detailed information screen 2020. The conversation screen displaying region 2010 is the region for displaying a conversation screen as described in the first embodiment and the second embodiment. The detailed information screen 2020 outputs a detailed information screen related to an action task shown in the conversation screen displaying region 2010 in accordance with an operation received via an operation region 2011 of the conversation screen displaying region 2010.

Also, the conversation screen displaying region 2010 outputs a conversation screen related to an action task in accordance with an operation received via an operation region 2021 of the detailed information screen 2020.

### [First Function in Third Embodiment]

An example of processing and an example of an operation image according to a first function of the information processing device 500C are now described.

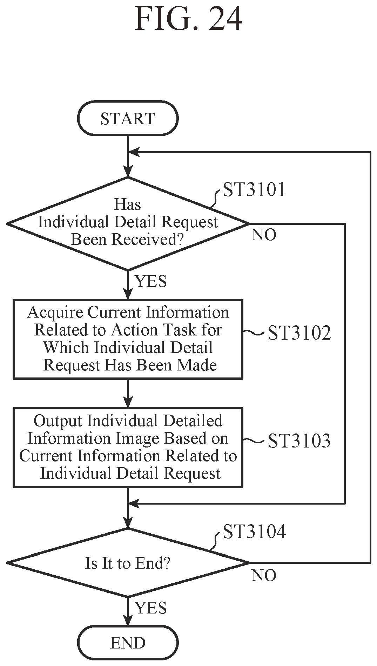

FIG. 24 is a flowchart illustrating an example of first processing in the information processing device according to the third embodiment of the present disclosure.

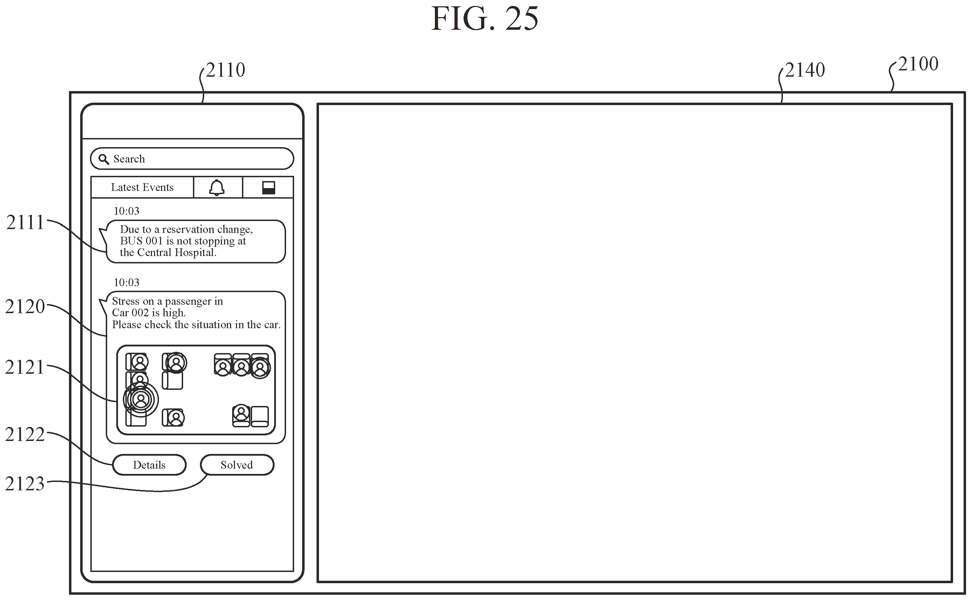

FIG. 25 is a first diagram for explaining the functions by the first processing in the information processing device according to the third embodiment of the present disclosure.

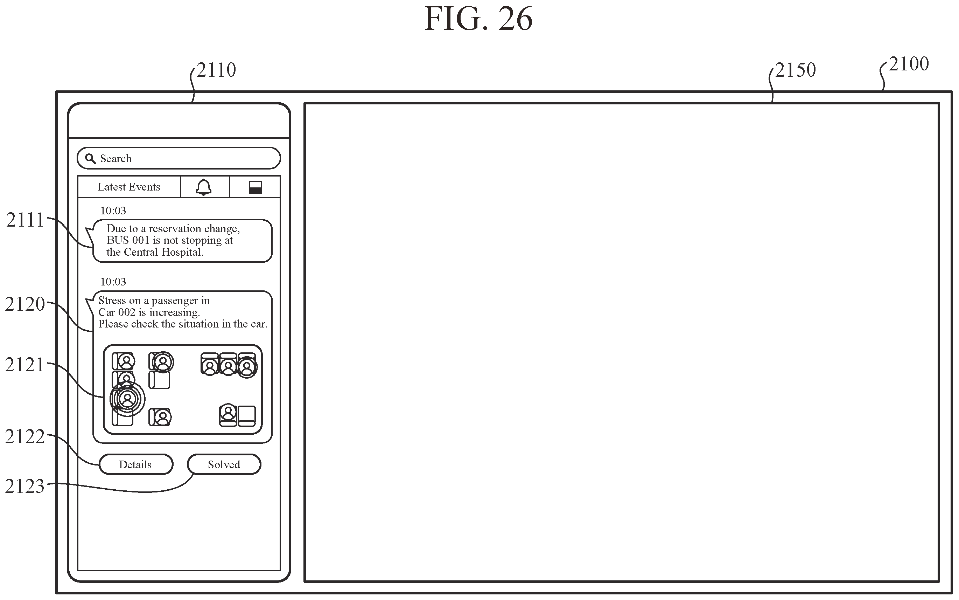

FIG. 26 is a second diagram for explaining the functions by the first processing in the information processing device according to the third embodiment of the present disclosure.

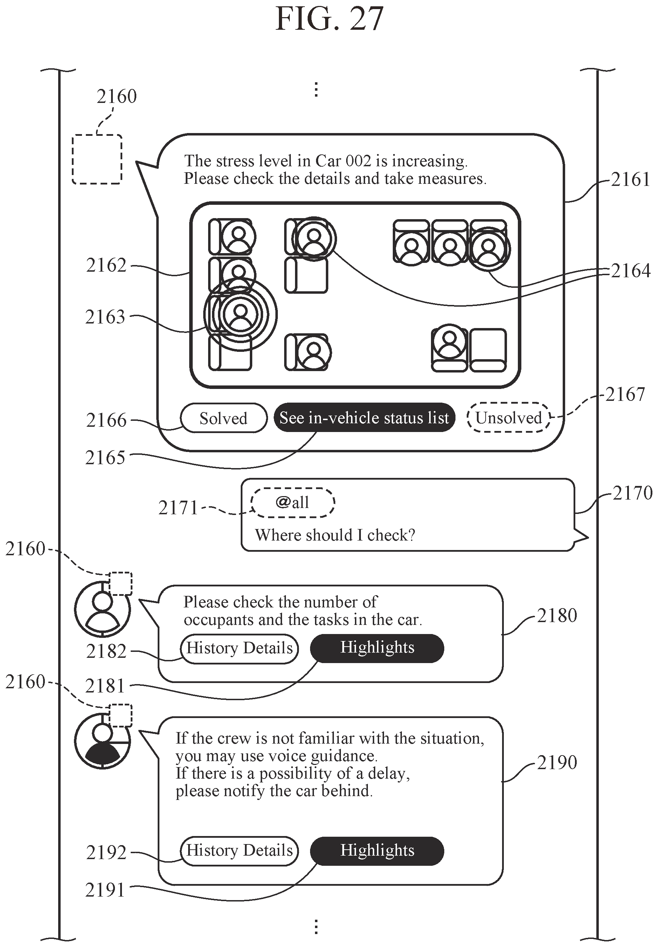

FIG. 27 is a third diagram for explaining the functions by the first processing in the information processing device according to the third embodiment of the present disclosure.

The processing illustrated in FIG. 24 is an information processing method implemented by the information processing device 500C.

For example, the information processing device 500C illustrated in FIG. 20 starts the processing illustrated in FIG. 24 in a state where an operation managing image at a time of normal monitoring is displayed via an input/output device.

The information processing device 500C then performs an individual detail request reception determining process (step ST3101).

In the individual detail request reception determining process, the detailed information controlling unit 570 of the information processing device 500C determines whether an individual detail request has been received from the conversational information controlling unit 520C via a conversation screen. If it is determined that any individual detail request has not been received from the conversational information controlling unit 520C via a conversation screen (step ST3101 "NO"), the detailed information controlling unit 570 proceeds to the processing in step ST3104.

If it is determined that an individual detail request has been received from the conversational information controlling unit 520C via a conversation screen (step ST3101 "YES"), the process proceeds to the processing in step ST3102.

The information processing device 500C then performs a process of acquiring the current information related to the action task for which the individual detail request has been made (step ST3102).

In the process, the detailed information controlling unit 570 of the information processing device 500C acquires the current information from an information source 200.

The information processing device 500C then performs a process of outputting a detailed information screen based on the current information related to the individual detail request (step ST3103).

In the process, the detailed information controlling unit 570 of the information processing device 500C outputs a detailed information screen on the basis of the current information.

The information processing device 500C then proceeds to an end determining process (step ST3104).

In the end determining process, a control unit (not shown) of the information processing device 500C determines whether to end the processing being performed by the information processing device 500C. The control unit (not shown) determines whether to end the processing being performed by the information processing device 500C, in accordance with an end command from outside or an execution program.

If the control unit (not shown) determines not to end the processing being performed by the information processing device 500C (step ST3104 "NO"), the process proceeds to the processing in step ST3101, and the repetitive processing is performed starting from the processing in step ST3101.

If the control unit (not shown) determines to end the processing being performed by the information processing device 500C (step ST3104 "YES"), the information processing device 500C ends the processing.

An example display by the first function in the third embodiment is now described.

FIG. 25 shows an operation managing image 2100, a conversation screen displaying region 2110, a conversation screen 2111, a conversation screen (operation region) 2120, an action task-related image (operation region) 2121, a detail button (operation region) 2122, a solved button (operation region) 2123, and a detailed information screen (normal management state) 2140 in a normal management state. The detailed information screen (normal management state) 2140 is an image showing detailed information related to moving objects. The detailed information screen (normal management state) 2140 is an image captured by an imaging device mounted on a moving object, for example, and is an image including information for identifying moving objects, as well as information such as times related to operations, durations related to operations, positions related to operations, and states related to operations.

FIG. 26 illustrates a state in which the detailed information screen is switched to a detailed information screen related to an action task in the operation managing image. When the conversation screen (operation region) 2120 and the detail button (operation region) 2122 are displayed in the conversation screen displaying region 2110, and an operation from a user is received via the detail button (operation region) 2122, an image including detailed information related to the action task shown in the conversation screen (operation region) 2120 is displayed in a detailed information screen (individual detailed state) 2150 related to the action task. The detailed information is information for identifying the moving object related to the action task, and is information indicating the situation of the moving object, for example.

FIG. 27 illustrates a conversation screen displaying region, and shows, in the conversation screen displaying region, an icon 2160, a conversation screen (operation region) 2161, an action task-related image (operation region) 2162, a status level (action level: high) 2163, a status level (action level: middle) 2164, an in-vehicle status list displaying button (operation region) 2165, a solved button (operation region) 2166, an unsolved indication 2167, a conversation screen 2170, a mention (designation information) 2171, a conversation screen (operation region) 2180, a highlight button (operation region) 2181, a history detail button (operation region) 2182, a conversation screen (operation region) 2190, a highlight button (operation region) 2191, and a history detail button (operation region) 2192.

The operation managing image 2100 is formed with the conversation screen displaying region 2110 and the detailed information screen (normal management state) 2140. The detailed information screen 2140 is an image in a normal management state.

In the state in FIG. 25, when the current information acquiring unit 510 acquires the current information indicating that the stress on an occupant in the vehicle is high according to a sensor mounted on the moving object, the conversational information controlling unit 520C outputs the conversation screen 2120 including the action task-related image (operation region) 2121 related to the occupant, on the basis of the current information. When the conversational information controlling unit 520C receives an operation via the action task-related image (operation region) 2121, the detailed information controlling unit 570 acquires the current information related to the action task, instead of the current information acquired in the normal management state, and outputs a detailed information screen 2151 indicating the states of the occupants in the respective moving objects on the basis of the current information. As a result, the detailed information screen shows the detailed information related to the action task shown in the conversation screen.

### [Second Function in Third Embodiment]

An example of processing and an example of an operation image according to a second function of the information processing device 500C are now described.

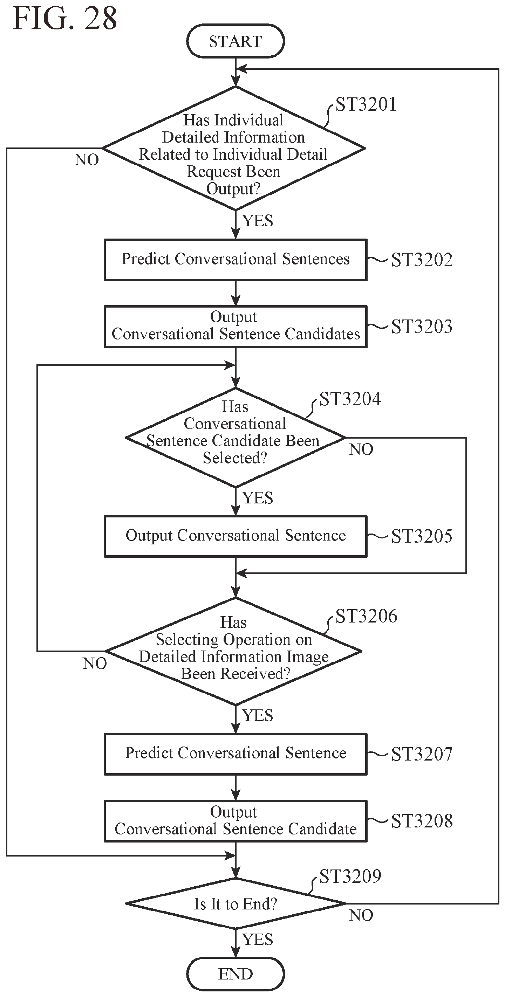

FIG. 28 is a flowchart illustrating an example of second processing in the information processing device according to the third embodiment of the present disclosure.

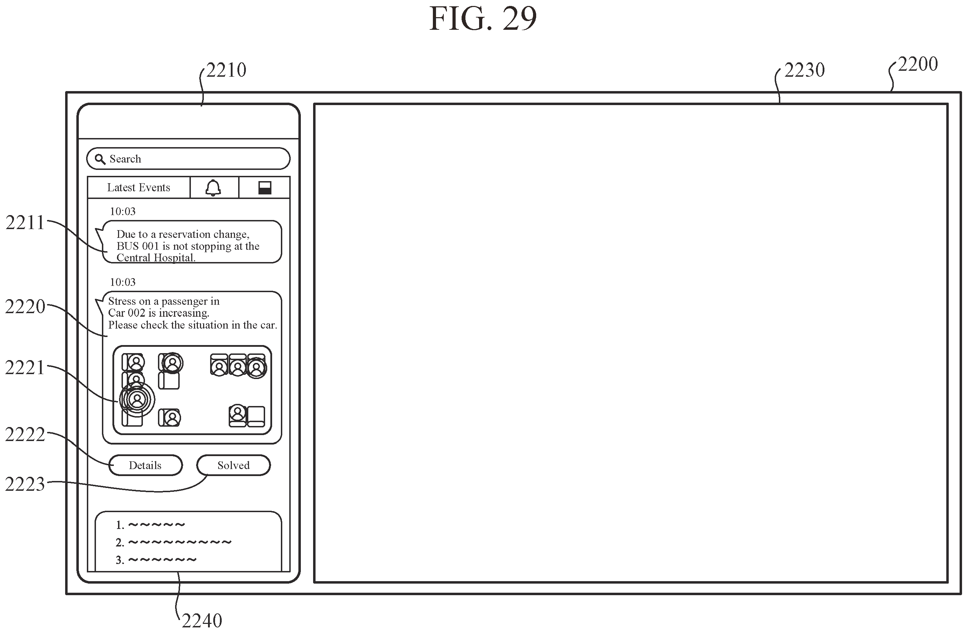

FIG. 29 is a first diagram for explaining the functions by the second processing in the information processing device according to the third embodiment of the present disclosure.

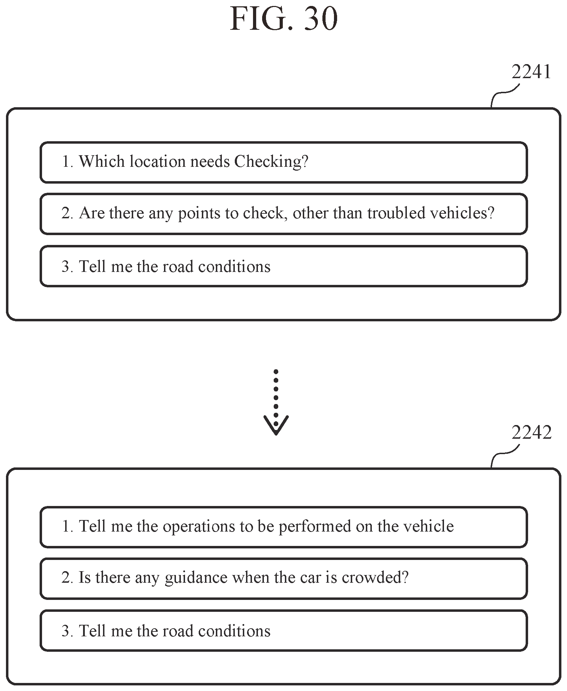

FIG. 30 is a second diagram for explaining the functions by the second processing in the information processing device according to the third embodiment of the present disclosure.

The processing illustrated in FIG. 28 is an information processing method implemented by the information processing device 500C.

For example, the information processing device 500C illustrated in FIG. 20 starts the processing illustrated in FIG. 28 in a state where a predicted conversational sentence 2240 (FIG. 29) is output at a time of normal monitoring.

The information processing device 500C then performs a detailed information output determining process related to an individual detail request (step ST3201).

In the detailed information output determining process, the conversational information controlling unit 520 of the information processing device 500C determines whether detailed information related to an individual detail request has been output.

If the conversational information controlling unit 520 determines that detailed information related to an individual detail request has not been output (step ST3201 "NO"), the information processing device 500C proceeds to the processing in step ST3209.

If the conversational information controlling unit 520 determines that detailed information related to an individual detail request has been output (step ST3201 "YES"), the information processing device 500C proceeds to the processing in step ST3202.

The information processing device 500C then performs a conversational sentence predicting process (step ST3202).

In the conversational sentence predicting process, the conversational sentence predicting unit 523 of the information processing device 500C predicts candidates for a conversational sentence of a user, using the current information related to an action task. The conversational sentence predicting unit 523 predicts candidates for a conversational sentence of the user, on the basis of feature information indicating the features of the action by the user as pre-stored, the current information, and the know-how information.

The information processing device 500C then performs a conversational sentence candidate outputting process (step ST3203).

In the conversational sentence candidate outputting process, the conversational sentence predicting unit 523 of the information processing device 500C outputs the predicted candidates for a conversational sentence.

The information processing device 500C then performs a conversational sentence candidate selection determining process (step ST3204).

In the conversational sentence candidate selection determining process, the conversational sentence receiving unit 540 of the information processing device 500C determines whether one of the candidates for a conversational sentence has been selected.

If the conversational sentence receiving unit 540 determines that any of the candidates for a conversational sentence has not been selected for a certain period of time (step ST3204 "NO"), the process proceeds to the processing in step ST3206.

If the conversational sentence receiving unit 540 determines that one of the candidates for a conversational sentence has been selected (step ST3204 "YES"), the process proceeds to the processing in step ST3205.

The information processing device 500C then performs a conversational sentence outputting process (step ST3205).

In the conversational sentence outputting process, the conversational sentence receiving unit 540 of the information processing device 500C outputs the conversational sentence selected from among the candidates for a conversational sentence.

The information processing device 500C then performs a selecting operation reception determining process on the detailed information screen (step ST3206).

In the selecting operation reception determining process, the conversational sentence receiving unit 540 of the information processing device 500C determines whether a selecting operation on the detailed information screen has been received.

A check is made to determine whether the conversational sentence selected from among the candidate conversational sentences predicted by the conversational sentence predicting unit 523 has been received.

If the conversational sentence receiving unit 540 determines that any selecting operation on the detailed information screen has not been selected for a certain period of time (step ST3206 "NO"), the process proceeds to the processing in step ST3204.

If the conversational sentence receiving unit 540 determines that a selecting operation on the detailed information screen has been selected (step ST3206 "YES"), the process proceeds to the processing in step ST3207.

The information processing device 500C then performs a conversational sentence predicting process (step ST3207).

In the conversational sentence predicting process, the conversational sentence predicting unit 523 of the information processing device 500C predicts a candidate for a conversational sentence of the user, on the basis of the selecting operation on the detailed information screen, the feature information indicating the features of the action by the user as pre-stored, the current information, and the know-how information.

The information processing device 500C then performs a conversational sentence candidate outputting process (step ST3208).

In the conversational sentence candidate outputting process, the conversational sentence predicting unit 523 of the information processing device 500C outputs the predicted candidate for a conversational sentence.

The information processing device 500C then proceeds to an end determining process (step ST3209).

In the end determining process, the control unit (not shown) of the information processing device 500C determines whether to end the processing being performed by the information processing device 500C. The control unit (not shown) determines whether to end the processing being performed by the information processing device 500C, in accordance with an end command from outside or an execution program.

If the control unit (not shown) determines not to end the processing being performed by the information processing device 500C (step ST3209 "NO"), the process proceeds to the processing in step ST3201, and the repetitive processing is performed starting from the processing in step ST3201.

If the control unit (not shown) determines to end the processing being performed by the information processing device 500C (step ST3209 "YES"), the information processing device 500C ends the processing.

An example display by the second function in the third embodiment is now described.

FIG. 29 shows an operation managing image 2200, a conversation screen displaying region 2210, a conversation screen 2211, a conversation screen (operation region) 2220, a status level (action level: high) 2221, a detail request button (operation region) 2222, a solution notifying button (operation region) 2223, a detailed information screen (individual detailed state) 2230, and a predicted conversational sentence 2240.

FIG. 30 shows a predicted conversational sentence (before a detail requesting operation) 2241 and a predicted conversational sentence (after a detail requesting operation) 2242.

For example, in the detailed information screen (individual detailed state) 2230 in the operation managing image 2200 illustrated in FIG. 29, when the detailed information screen related to the action task is displayed first, the predicted conversational sentence (before a detail requesting operation) 2241 is displayed. When one moving object is next selected from a plurality of moving objects in the detailed information screen, the predicted conversational sentence (after a detail requesting operation) 2242 is displayed in accordance with a selecting operation.

In this manner, the predicted conversational sentence changes depending on an operation on the detailed information screen.

### [Third Function in Third Embodiment]

An example of processing and an example of an operation image according to a third function of the information processing device 500C are now described.

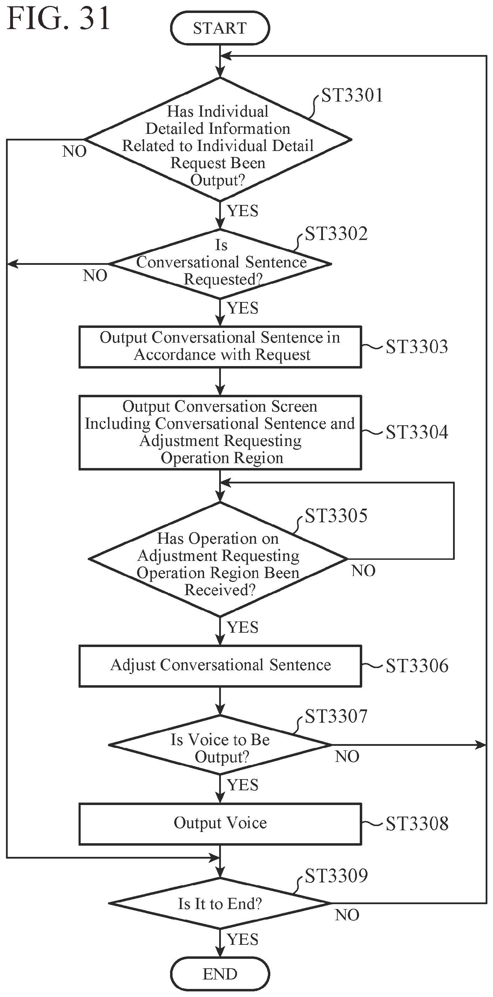

FIG. 31 is a flowchart illustrating an example of third processing in the information processing device according to the third embodiment of the present disclosure.

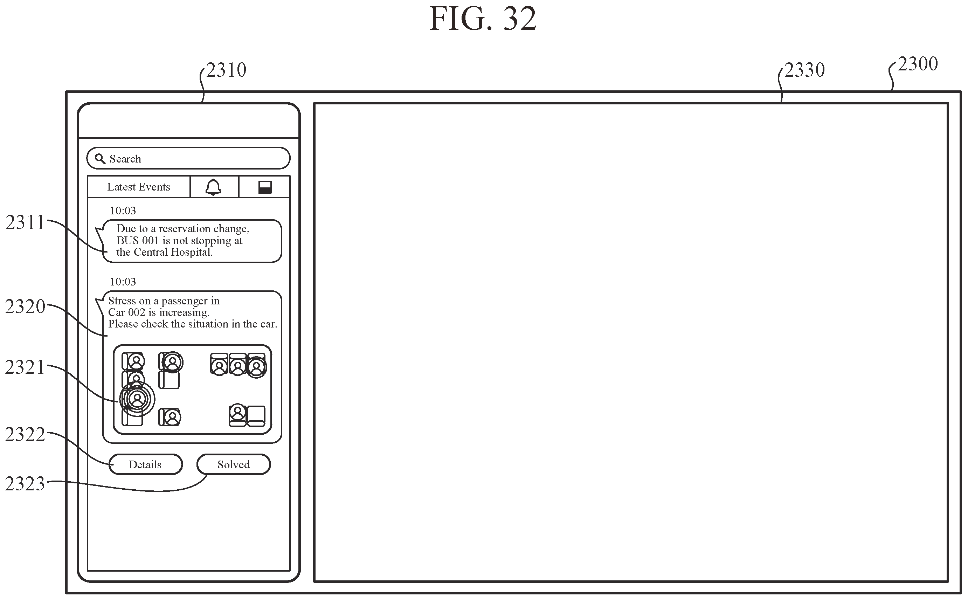

FIG. 32 is a first diagram for explaining the functions by the third processing in the information processing device according to the third embodiment of the present disclosure.

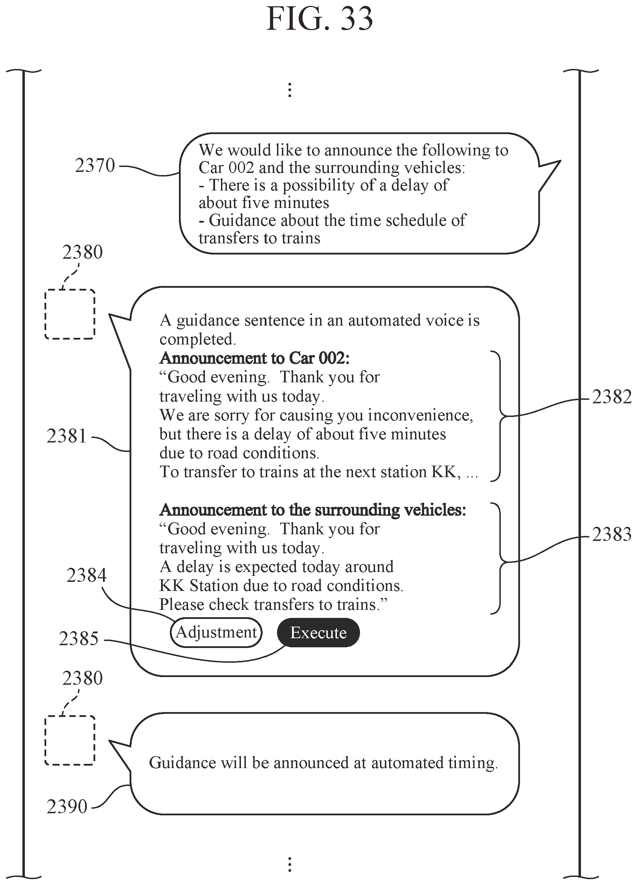

FIG. 33 is a second diagram for explaining the functions by the third processing in the information processing device according to the third embodiment of the present disclosure.

The processing illustrated in FIG. 31 is an information processing method implemented by the information processing device 500C.

For example, the information processing device 500C illustrated in FIG. 20 starts the processing illustrated in FIG. 31 in a state where an operation managing image is displayed.

The information processing device 500C then performs a detailed information output determining process related to an individual detail request (step ST3301).

In the determining process, the conversational sentence predicting unit 523 of the information processing device 500C determines whether detailed information related to an individual detail request has been output.

If the conversational sentence predicting unit 523 determines that detailed information related to an individual detail request has not been output (step ST3301 "NO"), the information processing device 500C proceeds to the processing in step ST3309.

If the conversational sentence predicting unit 523 determines that detailed information related to an individual detail request has been output (step ST3301 "YES"), the information processing device 500C proceeds to the processing in step ST3302.

The information processing device 500C then performs a conversational sentence request determining process (step ST3302).

In the process, the conversational sentence predicting unit 523 of the information processing device 500C determines whether a conversational sentence has been requested.

If the conversational sentence predicting unit 523 determines that any conversational sentence has not been requested for a certain period of time (step ST3302 "NO"), the process proceeds to the processing in step ST3309.

If the conversational sentence predicting unit 523 determines that a conversational sentence has been requested (step ST3302 "YES"), the process proceeds to the processing in step ST3303.

The information processing device 500C then performs a process of outputting a conversational sentence in accordance with the request (step ST3303).

In the process, the conversational sentence predicting unit 523 of the information processing device 500C outputs a conversational sentence in accordance with the request, to the conversational information controlling unit 520.

The information processing device 500C then performs a process of outputting a conversation screen including a conversational sentence and an adjustment requesting operation region (step ST3304).

In the process, the conversational information controlling unit 520 of the information processing device 500C outputs a conversation screen. The conversational information controlling unit 520 acquires a conversational sentence from the conversational sentence predicting unit 523, and outputs a conversation screen including the conversational sentence and an adjustment requesting operation region.

FIG. 33 illustrates an example of a conversation screen including an adjustment requesting operation region.

The conversation screen in FIG. 33 includes a conversation screen 2370, an icon 2380, a conversation screen (operation region) 2381, a predicted conversational sentence 2382, a predicted conversational sentence 2383, an adjustment button (operation region) 2384, and an execution button (operation region) 2385. The adjustment button (operation region) 2384 corresponds to the adjustment requesting operation region.

The information processing device 500C then performs an operation reception determining process for the adjustment requesting operation region (step ST3305).

In the operation reception determining process, the conversational sentence adjusting unit 522 of the information processing device 500C determines whether an operation on the adjustment requesting operation region has been received.

If the conversational sentence adjusting unit 522 determines that any operation has not been received for a certain period of time (step ST3305 "NO"), the process proceeds to step ST3307.

If the conversational sentence adjusting unit 522 determines that an operation has been received (step ST3305 "YES"), the process proceeds to the processing in step ST3306.

The information processing device 500C then performs a process of adjusting a conversational sentence (step ST3306).

In the process, the conversational sentence adjusting unit 522 of the information processing device 500C adjusts the conversational sentence of the user, on the basis of the operation by the user.

The information processing device 500C then performs a voice output determining process (step ST3307).

In the process, when acquiring an adjusted conversational sentence from the conversational sentence adjusting unit 522, the conversational information controlling unit 520C of the information processing device 500C determines whether to make a voice output.

If the conversational information controlling unit 520C determines not to make a voice output (step ST3307 "NO"), the process proceeds to the processing in step ST3301.

If the conversational information controlling unit 520C determines to make a voice output (step ST3307 "YES"), the process proceeds to the processing in step ST3308.

The information processing device 500C then performs a voice outputting process (step ST3308).

In the process, the conversational information controlling unit 520C of the information processing device 500C outputs a voice using conversational sentences.

The information processing device 500C then proceeds to an end determining process (step ST3309).

In the end determining process, the control unit (not shown) of the information processing device 500C determines whether to end the processing being performed by the information processing device 500C. The control unit (not shown) determines whether to end the processing being performed by the information processing device 500C, in accordance with an end command from outside or an execution program.

If the control unit (not shown) determines not to end the processing being performed by the information processing device 500C (step ST3309 "NO"), the process proceeds to the processing in step ST3301, and the repetitive processing is performed starting from the processing in step ST3301.

If the control unit (not shown) determines to end the processing being performed by the information processing device 500C (step ST3309 "YES"), the information processing device 500C ends the processing.

An example display by the third function in the third embodiment is now described.

FIGS. 32 to 34 illustrate examples of displays at a time when an action depending on the situation is assisted.

FIG. 32 illustrates an example of an operation managing image 2300 that includes a conversation screen displaying region 2310, a conversation screen 2311, a conversation screen (operation region) 2320, a status level (action level: high) 2321, a detail request button (operation region) 2322, a solution notifying button (operation region) 2323, a detailed information screen (individual detailed state) 2330, a detailed information screen 2340 for each moving object, and a bulk announcement button (operation region) 2341.

FIG. 33 illustrates a conversation screen displaying region, and shows, in the conversation screen displaying region, the icon 2380, the conversation screen (operation region) 2381, the predicted conversational sentence 2382, the predicted conversational sentence 2383, the adjustment button (operation region) 2384, the execution button (operation region) 2385, and a conversation screen 2390.

In the operation managing image 2300 illustrated in FIG. 32, an action task notification is made when an in-vehicle sensor detects an increase in the stress level of a passenger.

In this case, as illustrated in FIG. 33, when the user inputs a request for an action of broadcasting to the vehicle, the information processing device 500C considers a guidance sentence (conversational sentence) in an automated voice, and outputs the conversation screen 2381 (the predicted conversational sentence 2382 and the predicted conversational sentence 2383). The conversation screen 2381 includes operation regions such as an adjustment button for adjusting a conversational sentence and an execution button for conducting broadcasting, and adjustment and a voice output of a conversational sentence can be made by performing operations on the operation regions.

The present embodiment discloses the following configuration.

An information processing device further including
a conversational sentence predicting unit to predict candidates for a conversational sentence of a user, on a basis of feature information that is pre-stored and indicates a feature of an action by the user, the current information, and the know-how information, wherein
the conversational sentence receiving unit receives a conversational sentence selected from among the candidates for a conversational sentence predicted by the conversational sentence predicting unit.

With this configuration, it is possible to provide an information processing device that enables an interaction with a virtual responder simply by a selection made by a user (operation manager).

Also, with this configuration, it is possible to omit input operations and enable the interaction when the user (operation manager) is required to act quickly.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the conversational information controlling unit outputs voice data using the conversational sentence predicted by the conversational sentence predicting unit.

With this configuration, it is possible to provide an information processing device that enables facilitation of an announcement that is used when a user (operation manager) takes an action.

Also, with this configuration, it is possible to assist an action taking into consideration the states of passengers, the situations of the surrounding vehicles, and the like, regardless of the amount of experience of the user (operation manager).

Further, with this configuration, one user (operation manager) can simultaneously take actions for a plurality of moving objects.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device further including
a conversational sentence adjusting unit to adjust the conversational sentence of the user, on a basis of an operation by the user, wherein
the conversational information controlling unit outputs the conversation screen including the conversational sentence adjusted by the conversational sentence adjusting unit.

With this configuration, it is possible to provide the information processing device that enables a user to adjust a conversational sentence of the user presented by a virtual responder.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the conversation screen output by the conversational information controlling unit includes a detail requesting operation region that receives an operation for requesting details of the action task shown in the conversation screen, and
the information processing device further comprises a detailed information controlling unit to acquire the current information related to the action task for which details are requested and output a detailed information screen based on the current information when a detail request is received via the detail requesting operation region.

With this configuration, it is possible to provide an information processing device that links a conversation screen and a detailed information screen to each other.

Further, the present disclosure has an effect of being able to provide an information processing method, the information processing program, or an operation management system that has the same effects as above, by applying the above configuration to the information processing method, the information processing program, or the operation management system.

The present embodiment discloses the following configuration.

An information processing device in which
the detailed information controlling unit outputs the detailed information screen including a selecting operation region that receives a selecting operation, and
the conversational information controlling unit outputs the conversation screen, using the current information related to the selecting operation region on which the selecting operation has been performed.

With this configuration, it is possible to provide an information processing device that links a conversation screen and a detailed information screen to each other.

Further, the present disclosure has an effect of being able to provide an information processing method, the information processing program, or an operation management system that has the same effects as above, by applying the above configuration to the information processing method, the information processing program, or the operation management system.

A hardware configuration for implementing functions according to the present disclosure is now described.

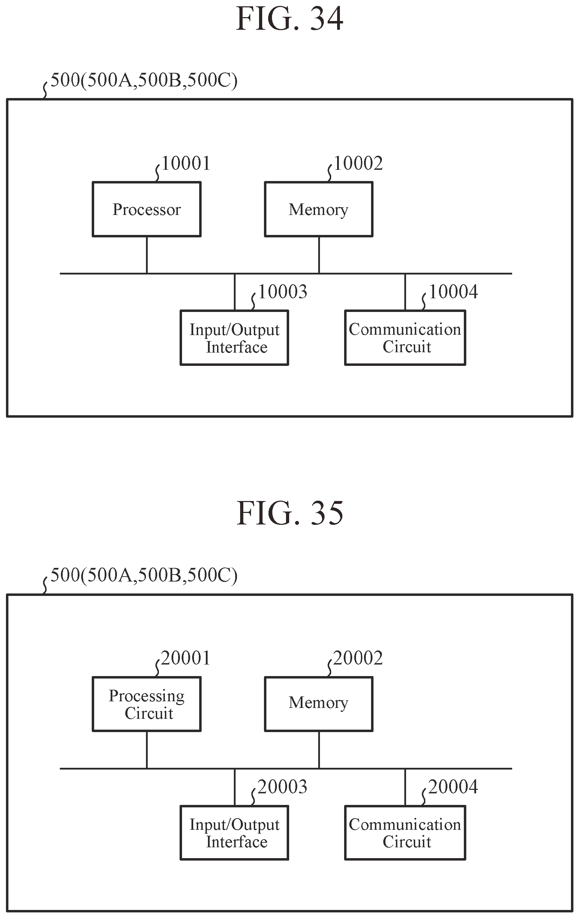

FIG. 34 is a diagram illustrating a first example of a hardware configuration for implementing functions achieved by a configuration according to the present disclosure.

FIG. 35 is a diagram illustrating a second example of a hardware configuration for implementing functions achieved by a configuration according to the present disclosure.

Each of the information processing devices 500, 500A, 500B, and 500C of the present disclosure is formed with hardware as illustrated in FIG. 34 or 36.

As illustrated in FIG. 34, each of the information processing devices 500, 500A, 500B, and 500C includes a processor 10001, a memory 10002, an input/output interface 10003, and a communication circuit 10004, for example.

The processor 10001 and the memory 10002 are mounted on a computer, for example.

The memory 10002 stores a program for causing the computer to function as the current information acquiring unit 510, the conversational information controlling unit 520, the determination-assisting information generating unit 521, the conversational sentence adjusting unit 522, the conversational sentence predicting unit 523, the statistical information outputting unit 524, the priority level calculating unit 525, the supplementary information outputting unit 526, the action operating signal outputting unit 530, the conversational sentence receiving unit 540, the designation receiving unit 550, the know-how information acquiring unit 560, the detailed information controlling unit 570, and the control unit (not shown). As the program stored in the memory 10002 is read and executed by the processor 10001, the functions of the current information acquiring unit 510, the conversational information controlling unit 520, the determination-assisting information generating unit 521, the conversational sentence adjusting unit 522, the conversational sentence predicting unit 523, the statistical information outputting unit 524, the priority level calculating unit 525, the supplementary information outputting unit 526, the action operating signal outputting unit 530, the conversational sentence receiving unit 540, the designation receiving unit 550, the know-how information acquiring unit 560, the detailed information controlling unit 570, and the control unit (not shown) are implemented.

Also, the storage unit (not shown) is formed with the memory 10002 or some other memory (not shown).

Further, the communication unit (not shown) is formed with the communication circuit 10004.

The processor 10001 uses a central processing unit (CPU), a graphics processing unit (GPU), a microprocessor, a microcontroller, or a digital signal processor (DSP), for example.

The memory 10002 may be a nonvolatile or volatile semiconductor memory such as a random access memory (RAM), a read only memory (ROM), an erasable programmable ROM (EPROM), an electrically erasable programmable read only memory (EEPROM), or a flash memory, may be a magnetic disk such as a hard disk or a flexible disk, may be an optical disk such as a compact disc (CD) or a digital versatile disc (DVD), or may be a magnetooptical disk.

The processor 10001 and the memory 10002 or the communication circuit 10004 are connected in such a manner as to transmit data to each other. Also, the processor 10001, the memory 10002, and the communication circuit 10004 are connected in such a manner as to exchange data with some other hardware via the input/output interface 10003.

Alternatively, the functions of the current information acquiring unit 510, the conversational information controlling unit 520, the determination-assisting information generating unit 521, the conversational sentence adjusting unit 522, the conversational sentence predicting unit 523, the statistical information outputting unit 524, the priority level calculating unit 525, the supplementary information outputting unit 526, the action operating signal outputting unit 530, the conversational sentence receiving unit 540, the designation receiving unit 550, the know-how information acquiring unit 560, the detailed information controlling unit 570, and the control unit (not shown) in the information processing devices 500, 500A, 500B, and 500C may be implemented by a dedicated processing circuit 20001, as shown in FIG. 35.

The processing circuit 20001 uses a single circuit, a composite circuit, a programmed processor, a parallel-programmed processor, an application specific integrated circuit (ASIC), a programmable logic device (PLD), a field-programmable gate array (FPGA), a system-on-a-chip (SoC), or a system large-scale integration (LSI), for example.

Also, the storage unit (not shown) is formed with a memory 20002 or some other memory (not shown).

The memory 20002 may be a nonvolatile or volatile semiconductor memory such as a random access memory (RAM), a read only memory (ROM), an erasable programmable ROM (EPROM), an electrically erasable programmable read only memory (EEPROM), or a flash memory, may be a magnetic disk such as a hard disk or a flexible disk, may be an optical disk such as a compact disc (CD) or a digital versatile disc (DVD), or may be a magnetooptical disk.

Further, the communication unit (not shown) is formed with a communication circuit 20004.

The processing circuit 20001 and the memory 20002 or the communication circuit 20004 are connected in such a manner as to transmit data to each other. Also, the processing circuit 20001, the memory 20002, and the communication circuit 20004 are connected in such a manner as to exchange data with some other hardware via an input/output interface 20003.

Note that the functions of the current information acquiring unit 510, the conversational information controlling unit 520, the determination-assisting information generating unit 521, the conversational sentence adjusting unit 522, the conversational sentence predicting unit 523, the statistical information outputting unit 524, the priority level calculating unit 525, the supplementary information outputting unit 526, the action operating signal outputting unit 530, the conversational sentence receiving unit 540, the designation receiving unit 550, the know-how information acquiring unit 560, the detailed information controlling unit 570, and the control unit (not shown) in the information processing devices 500, 500A, 500B, and 500C may be implemented by different processing circuits from one another, or may be collectively implemented by a processing circuit.

Alternatively, some of the functions of the current information acquiring unit 510, the conversational information controlling unit 520, the determination-assisting information generating unit 521, the conversational sentence adjusting unit 522, the conversational sentence predicting unit 523, the statistical information outputting unit 524, the priority level calculating unit 525, the supplementary information outputting unit 526, the action operating signal outputting unit 530, the conversational sentence receiving unit 540, the designation receiving unit 550, the know-how information acquiring unit 560, the detailed information controlling unit 570, and the control unit (not shown) in the information processing devices 500, 500A, 500B, and 500C may be implemented by the processor 10001 and the memory 10002, and the remaining functions may be implemented by the processing circuit 20001.

Note that, within the scope of the present disclosure, the embodiments can be freely combined, modifications may be made to any component of each embodiment, or any component may be omitted from each embodiment.

### INDUSTRIAL APPLICABILITY

The present disclosure is suitable for use in an operation management system for moving objects, because the disclosure can assist an action so that an operation manager can take an appropriate action for an event to be handled.

### REFERENCE SIGNS LIST

10: operation management system, 100 (100-1,..., 100-n (n ≥ 1)): moving object, 200: information source, 300: input/output device, 500, 500A, 500B, 500C: information processing device, 510: current information acquiring unit, 520: conversational information controlling unit, 521: determination-assisting information generating unit, 522: conversational sentence adjusting unit, 523: conversational sentence predicting unit, 524: statistical information outputting unit, 525: priority level calculating unit, 526: supplementary information outputting unit, 530: action operating signal outputting unit, 540: conversational sentence receiving unit, 550: designation receiving unit, 560: know-how information acquiring unit, 570: detailed information controlling unit, 1101: image (icon), 1102: image (conversation screen (operation region)), 1103: image (execution button (operation region)), 1104: image (cancel button (operation region)), 1105: image (action task-related image (operation region)), 1106: image (unsolved indication), 1107: image (conversation screen (operation region)), 1108: image (conversation screen (operation region)), 1109: image (operation diagram displaying button (operation region)), 1110: image (history detail button (operation region)), 1201: image (icon), 1202: image (conversation screen (operation region)), 1203: image (execution button (operation region)), 1204: image (cancel button (operation region)), 1205: image (unsolved indication), 1206: image (conversation screen (operation region)), 1207: image (mention (designation information)), 1208: image (icon (virtual responder)), 1209: image (conversation screen (operation region)), 1210: image (operation diagram displaying button (operation region)), 1211: image (history detail button (operation region)), 1212: image (icon (virtual responder)), 1213: image (conversation screen (operation region)), 1214: image (history detail button (operation region)), 1215: image (conversation screen (operation region)), 1216: image (mention (designation information)), 1301: image (icon), 1302: image (conversation screen (operation region)), 1303: image (unsolved indication), 1310: image (operation region), 1311: image (operation region (action operating candidate)), 1312: image (operation region (action operating candidate)), 1313: image (operation region (action operating candidate)), 1320: image (selection-assisting information), 1321: image (statistical information), 1322: image (statistical information), 1323: image (statistical information), 1401: image (icon), 1402: image (conversation screen (operation region)), 1403: image (unsolved indication), 1410: image (operation region), 1411: image (operation region (action operating candidate, selection-assisting information)), 1412: image (operation region (action operating candidate, selection-assisting information)), 1413: image (operation region (action operating candidate, selection-assisting information)), 1501: image (icon), 1502: image (conversation screen (operation region)), 1503: image (unsolved indication), 1510: image (operation region), 1511: image (operation region (action operating candidate)), 1512: image (operation region (action operating candidate)), 1513: image (operation region (action operating candidate)), 1520: image (selection-assisting information), 1521: image (supplementary information), 1522: image (supplementary information), 1523: image (supplementary information), 1601: image (icon), 1602: image (conversation screen (operation region)), 1603: image (execution button (operation region)), 1604: image (cancel button (operation region)), 1605: image (solved indication), 1606: image (know-how input (operation region)), 1607: image (detail request (operation region)), 1610: image (conversation screen), 1620: image (conversation screen (operation region)), 1621: image (conversation screen (operation region)), 1622: image (operation diagram displaying button (operation region)), 1623: image (history detail button (operation region)), 1630: image (conversation screen), 1701: image (task selecting image (operation region)), 1702: image (selection indication), 1711: image (task selecting image (operation region)), 1712: image (action required indication), 2000: image (operation managing image), 2010: image (conversation screen displaying region), 2011: operation region, 2020: image (detailed information screen), 2021: operation region, 2100: image (operation managing image), 2110: image (conversation screen displaying region), 2111: image (conversation screen), 2120: image (conversation screen (operation region)), 2121: image (action task-related image (operation region)), 2122: image (detail button (operation region)), 2123: image (solved button (operation region)), 2140: image (detailed information screen (normal management state)), 2150: image (detailed information screen (individual detailed state), 2160: image (icon), 2161: image (conversation screen (operation region)), 2162: image (action task-related image (operation region)), 2163: image (status level (action level: high)), 2164: image (status level (action level: medium)), 2165: image (in-vehicle status list displaying button (operation region)), 2166: image (solved button (operation region)), 2167: image (unsolved indication), 2170: image (conversation screen), 2171: image (mention (designation information)), 2180: image (conversation screen (operation region)), 2181: image (highlight button (operation region)), 2182: image (history detail button (operation region)), 2190: image (conversation screen (operation region)), 2191: image (highlight button (operation region)), 2192: image (history detail button (operation region)), 2200: image (operation managing image), 2210: image (conversation screen displaying region), 2211: image (conversation screen), 2220: image (conversation screen (operation region)), 2221: image (status level (action level: high)), 2222: image (detail request button (operation region)), 2223: image (solution notifying button (operation region)), 2230: image (detailed information screen (individual detailed state), 2240: image (predicted conversational sentence), 2241: image (predicted conversational sentence (before detail requesting operation)), 2242: image (predicted conversational sentence (after detail requesting operation)), 2300: image (operation managing image), 2310: image (conversation screen displaying region), 2311: image (conversation screen), 2320: image (conversation screen (operation region)), 2321: image (status level (action level: high)), 2322: image (detail request button (operation region)), 2323: image (solution notifying button (operation region)), 2330: image (detailed information screen (individual detailed state), 2370: image (conversation screen), 2380: image (icon), 2381: image (conversation screen (operation region)), 2382: image (predicted conversational sentence), 2383: image (predicted conversational sentence), 2384: image (adjustment button (operation region)), 2385: image (execution button (operation region)), 2390: image (conversation screen), 10001: processor, 10002: memory, 10003: input/output interface, 10004: communication circuit, 20001: processing circuit, 20002: memory, 20003: input/output interface, 20004: communication circuit

## Claims

1. An information processing device comprising:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task, after receiving an operation on the at least one operation region.

2. The information processing device according to claim 1, further comprising
a conversational sentence receiving unit to receive a conversational sentence of a user, wherein
the conversational information controlling unit outputs the conversation screen, further using the conversational sentence received by the conversational sentence receiving unit.

3. The information processing device according to claim 2, further comprising
a designation receiving unit to receive designation information for designating the virtual responder via the conversational sentence receiving unit, wherein
the conversational information controlling unit outputs the conversation screen including a conversational sentence by the virtual responder, further on a basis of the designation information.

4. The information processing device according to claim 1, wherein
the conversation screen including the conversational sentence by the virtual responder output by the conversational information controlling unit includes a plurality of operation regions as the at least one operation region.

5. The information processing device according to claim 2, wherein
the conversation screen including the conversational sentence by the virtual responder output by the conversational information controlling unit includes a plurality of operation regions as the at least one operation region.

6. The information processing device according to claim 3, wherein
the conversation screen including the conversational sentence by the virtual responder output by the conversational information controlling unit includes a plurality of operation regions as the at least one operation region.

7. The information processing device according to claim 4, further comprising
a determination-assisting information generating unit to generate determination-assisting information on a basis of the action task for the plurality of operation regions and an operation history related to the action task, wherein
the conversation screen output by the conversational information controlling unit includes the determination-assisting information for each of the plurality of operation regions.

8. The information processing device according to claim 5, further comprising
a determination-assisting information generating unit to generate determination-assisting information on a basis of the action task for the respective operation regions and an operation history related to the action task, wherein
the conversation screen output by the conversational information controlling unit includes the determination-assisting information for each of the plurality of operation regions.

9. The information processing device according to claim 6, further comprising
a determination-assisting information generating unit to generate determination-assisting information on a basis of the action task for the respective operation regions and an operation history related to the action task, wherein
the conversation screen output by the conversational information controlling unit includes the determination-assisting information for each of the plurality of operation regions.

10. The information processing device according to any one of claims 7 to 9, wherein
the determination-assisting information is statistical information based on know-how information including metadata of each responder.

11. The information processing device according to any one of claims 7 to 9, wherein
the determination-assisting information is a priority level of an operation related to the at least one operation region.

12. The information processing device according to any one of claims 7 to 9, wherein
the determination-assisting information is selection reason information including a reason for selecting the at least one operation region.

13. The information processing device according to any one of claims 1 to 12, wherein,
when an operation command related to the action task is issued, the conversational information controlling unit outputs the conversation screen including a know-how inputting region for receiving an input of know-how information related to a responder, and
the information processing device further comprises a know-how information acquiring unit to store the know-how information acquired via the know-how inputting region, metadata of each responder being attached to the know-how information.

14. The information processing device according to any one of claims 1 to 12, wherein
the conversational information controlling unit newly outputs a task selecting image for each action task when a plurality of action tasks to be handled is present at a same time, and outputs the conversation screen related to a selected action task when the action task is selected via the task selecting image.

15. The information processing device according to any one of claims 2, 3, 5, 6, 8, and 9, further comprising
a conversational sentence predicting unit to predict candidates for a conversational sentence of a user, on a basis of feature information that is pre-stored and indicates a feature of an action by the user, the current information, and the know-how information, wherein
the conversational sentence receiving unit receives a conversational sentence selected from among the candidates for a conversational sentence predicted by the conversational sentence predicting unit.

16. The information processing device according to claim 15, wherein
the conversational information controlling unit outputs voice data using the conversational sentence predicted by the conversational sentence predicting unit.

17. The information processing device according to claim 15 or 16, further comprising
a conversational sentence adjusting unit to adjust the conversational sentence of the user, on a basis of an operation by the user, wherein
the conversational information controlling unit outputs the conversation screen including the conversational sentence adjusted by the conversational sentence adjusting unit.

18. The information processing device according to any one of claims 1 to 17, wherein
the conversation screen output by the conversational information controlling unit includes a detail requesting operation region that receives an operation for requesting details of the action task shown in the conversation screen, and
the information processing device further comprises a detailed information controlling unit to acquire the current information related to the action task for which details are requested and output a detailed information screen based on the current information when a detail request is received via the detail requesting operation region.

19. The information processing device according to claim 18, wherein
the detailed information controlling unit outputs the detailed information screen including a selecting operation region that receives a selecting operation, and
the conversational information controlling unit outputs the conversation screen, using the current information related to the selecting operation region on which the selecting operation has been performed.

20. An information processing method implemented by an information processing device, the information processing method comprising,
by a current information acquiring unit of the information processing device, acquiring current information that is information received at a current time,
by a conversational information controlling unit of the information processing device, outputting a conversation screen including a conversational sentence and at least one operation region related to an action task by a virtual responder generated on a basis of the current information and know-how information about each past responder related to an operation of a moving object, and
by an action operating signal outputting unit of the information processing device, outputting a control signal for issuing a command to perform an operation related to the action task, after receiving an operation on the at least one operation region.

21. An operation management system comprising an information processing device to perform communication with a moving on-board device mounted on each moving object,
the information processing device including:
a current information acquiring unit to acquire current information that is information received at a current time;
a conversational information controlling unit to output a conversation screen including a conversational sentence and at least one operation region related to an action task by a virtual responder generated on a basis of the current information and know-how information about each past responder related to an operation of a moving object; and
an action operating signal outputting unit to output a control signal for issuing a command to perform an operation related to the action task to the moving on-board device, after receiving an operation on the operation region.
